# EUROPEAN PATENT APPLICATION

(11) **EP 1 202 265 A1**
(43) Date of publication of application: **02.05.2002**
(21) Application number: 00123051.5
(22) Date of filing: 24.10.2000
(51) Int. Cl.: G11B 7/26, G11B 7/24

(54) **Optical storage medium and method and system for manufacturing thereof**

(71) Applicant: 3M Innovative Properties Company, Saint Paul, MN 55133-3427 (US)
(72) Inventor: Schöppel, Wolfgang Georg, 41470 Neuss (DE); Schweizer, Werner, 8910 Affoltern am Albis (CH)
(74) Representative: VOSSIUS & PARTNER

(57) **Abstract**

The present invention relates to improved methods and systems for manufacturing optical storage media from which information can be read out and/or into which information can be recorded by means of a beam of electromagnetic radiation. Furthermore, the present invention relates to an improved optical storage medium which can be obtained with the method and system of the present invention. The optical storage medium comprises various layers (1, 5, 7), wherein at least two of them are bonded by means of a pressure sensitive adhesive layer (4). At least the adhesive layer is cut by means of a laser beam so that the disadvantages of mechanical cutting tools are overcome.

## Description

### Field of the invention

The present invention relates to a method for providing a multilayer material, and in particular to the manufacturing of an optical storage medium such as a DVD (digital video disc, sometimes also digital versatile disc) or DVR (digital video recordable disc) from which information can be read out and/or into which information can be recorded with a beam of electromagnetic radiation, as well as to the optical storage medium itself. The optical storage medium comprises at least one substrate bearing on the surface thereof on which the beam of electromagnetic radiation is incident, one or more readable and/or recordable information storage layers and one or more radiation-transmissive cover films, wherein the cover film may have a configuration similar or identical to the substrate. Typically, the electromagnetic radiation used for reading and recording is light.

### Background of the invention

Optical storage media suitable for recording and reproducing of videos and especially entire movies require a large storage capacity of several Gigabytes (GB). This requirement is met by some DVD formats (digital video disc, sometimes also digital versatile disc). DVDs can be divided into DVD-ROMs which are exclusively for reproduction, DVD-RAMS which can also be used for multiple recordings of data ("write many, read many") and DVD-Rs which are recordable once ("write once, read many"). The formats for DVDs have been provisionally defined by an industry consortium (ECMA, Executive Committee of the DVD Consortium) as ECMA/TC 31/97/2, Geneva, Switzerland, January 1997, and presently comprise 4.7 GB, 8.5 GB, 9.4 GB and 17 GB formats.

DVDs generally comprise two disc shaped members, the inner surfaces of which being bonded together with an adhesive layer which must be at least partially transparent in specific configurations if the information on one or more of the recording layers is read through the adhesive layer. In the 4.7 GB single layer format only one of the members comprises an information storage layer formed by the inner surface of the substrate which exhibits a sequence of pits with a minimum size of, for example, 0.4 µm. An aluminum layer and, optionally, further layers are deposited on said information storage layer optionally followed by a protective coat. The inner surface of the second substrate which is a dummy substrate is bonded to the inner surface of the first member, i. e., for example, to the Al layer or to the protective coat layer. In this construction the recording layer is read through the first substrate. The 8.5 GB and, in particular, the 9.4 GB and 17 GB formats exhibit more complicated constructions and usually comprise an information storage layer on each substrate. Further details on DVDs and on processes of manufacturing DVDs can be taken, for example, from EP-A-0 725 396.

The 4.7 GB single layer re-writable DVD format has significantly more storage capacity than a conventional CD (compact disc) but still offers an insufficient storage capacity for certain video recording purposes.

A high storage capacity format which has been suggested as DVR (Digital Video Recordable disc) overcomes this problem and provides among other constructions a single storage layer format with high capacity which is suitable for digital video recording and storage. Typical constructions and formats of DVR discs are described, for example, in EP-A-0 729 141, EP-A-0 867 873 and in EP-A-0 874 362.

DVR discs generally comprise a disc-shaped substrate exhibiting on one or both major surfaces an information storage layer comprising a structure of lands and grooves. The DVR discs further comprise a light-transmissive cover film which is applied to the information storage layer on one or both sides of the substrate.

Furthermore, this cover film may have a configuration similar or identical to the substrate.

It is disclosed in EP-A-0 867 873 that in another configuration the light-transmissive film is obtained by spin-coating a liquid ultraviolet-curable resin onto the information storage film with subsequent curing. This method is, however, disadvantageous for several reasons. In DVR discs the variation or unevenness of the thickness of the light-transmissive cover film over the radial extension of the disc has to be controlled very carefully in order to minimize the variation in the optical path length for the impinging light. Spin-coating of a liquid UV-curable resin with a low variation of the thickness of the liquid layer requires, for example, that the resin is dosed into the center of the disc. If the liquid resin is applied off-center a large variation of the thickness of the resulting spin-coated resin layer is obtained. Since typical DVR discs comprise a central hole removable pieces have to be attached to the disc to temporarily close the central hole during spin coating. Even when applying the liquid resin to the center of the DVR disc it is difficult to obtain the required layer thickness variation up to the outer edge of the disc. The main problem is that the centrifugal force which is pushing the liquid adhesive from the center of the disc to its circumference, linearly increases with the radius. Equilibrium is obtained from the action of the centrifugal force on the one side and the frictional force which is due to the viscosity of the liquid adhesive, on the other side. Due to the radius dependence of the centrifugal force it is in principle not possible to obtain a layer of constant thickness. It has been suggested to decrease the thickness variation by slightly increasing the diameter of the disc and obtaining the required size by die-cutting the DVR disc including the disc shaped substrate after spin-coating and preferably UV curing. Die-cutting of the disc shaped member after curing is disadvantageous because this establishes an additional process step and may result in the formation of debris and/or introduce stress into the substrate which translates into optical distortions of the light-transmissive layers. UV curing may also result in shrinkage and/or distortion of the UV-curable layer and in unfavorable heat generation upon curing. Another problem arises from the fact that the substrate and the spin-coated cover film have different expansion coefficients causing deformation of the disc due to temperature variations.

It is furthermore suggested in EP-A-0 867 873 to use a polymer film such as, for example, a polycarbonate sheet as light-transmissive cover film or film and adhere such film to the information storage layer by means of a thin, spin-coated layer of a UV curable liquid resin. This method has, however, several disadvantages. Spin-coating of a liquid resin layer with a thickness of as low as, for example, 5 µm, requires a considerable amount of time which renders the process unfavorable from an economic point of view. Also the formation of bubbles was observed in the liquid resin layer which renders the resulting DVR discs optically unacceptable. Furthermore, dust particles having dimensions similar to the thickness of the liquid resin layer are critical. They may not be embedded in the layer, thus deforming it.

It is another requirement of DVR discs that the light-transmissive cover films are optically highly isotropic so that the change or variation in the refractive index of the light-transmissive layer or layers as seen by the impinging light, is as low as possible. The surfaces of the light-transmissive layers where the light is incident upon, furthermore have to be as smooth as possible in order to avoid scattering losses. Prior art fails to provide criteria how to select a polymeric film as a light-transmissive cover film so that such cover layer provides the required low or very low variation in its optical properties.

Furthermore, in the prior art several methods for manufacturing optical storage media are known. For example, WO-A-95/21444 describes a method for cutting of the central holes in the substrate which have been produced with injection-molding techniques using a controlled laser beam for the cutting. The substrate preferably consists of PMMA or PC. EP-B-0 448 408 refers to a method for the cutting of substrates utilizing optical means for centering of a laser and an opto-mechanical system allowing to guide a laser beam in circles, so that center holes as well as the outer circumference of the substrate can be cut with a CO₂ laser. In some of the embodiments of this patent, the substrate itself is cut, while in an other embodiment cutting of the substrate including a recording layer and a protective layer on the substrate is illustrated. JP-A-63-203308, JP-A-07-050037 and JP-A-01-292638 describe methods in which complete discs including a protective layer are cut using a laser beam. JP-A-07-050037 shows a method where the cutting is performed in two steps. In the first steps the border line is cut through utilizing a relatively wide beam. The thus created slot is filled with a resin, which again is cut through with a smaller or more narrow laser beam, so that a border ring of the resin is formed which is supposed to protect the side of the disc.

In the manufacturing of optical storage media the various layers of the discs are laminated by means of an adhesive. In order to carry out the lamination onto the surface of a DVD half the adhesive preferably has to be present in the same shape as the DVD half, i.e., in the form of a flat ring with an outer diameter of about 120 mm and an inner hole diameter of about 15 mm. Because the adhesive has a thickness of only about 50 µm, this flat ring needs the support of a liner. In general, all known processes use two liners and a relatively complicated process which is difficult to implement inline. Offline die-cutting has the disadvantage of another process step which may lead to contamination of the tape as well as the risk of deformation of the die-cuts during storage and high temperatures. Critical issues in conventional die-cutting are, for example, wear of dies which need reworking after approximately 300.000 to 500.000 parts and new tools after approximately 1 million parts, and sticking of the adhesive to the tool which requires lubrication or cooling. Furthermore, with the die-cutting only fixed shapes are possible so that any change of the cut dimensions requires a new tool.

### Summary of the invention

It is an object of the present invention to provide improved methods and systems for manufacturing a multilayer material, in particular an optical storage medium, as well as improved optical storage media in which the deficiencies of the prior art are overcome. In particular, the present invention is directed to the provision of an optical storage medium in which the laminate is bonded by means of at least one pressure sensitive adhesive layer, wherein the manufacturing problems and difficulties are overcome or at least substantially reduced. This object is achieved with the features of the claims.

In accordance with a first aspect, the present invention recites a method for manufacturing an optical storage medium from which information can be read out and/or into which information can be recorded by means of a beam of electromagnetic radiation, said optical storage medium comprising at least one substrate and at least one pressure sensitive adhesive layer, said method comprising the steps of:
- providing a first laminate comprising said at least one pressure sensitive adhesive layer having a first adhesive surface and an opposite second adhesive surface and an additional layer applied to said first surface of said adhesive layer;
- providing said at least one substrate of said optical storage medium having a first surface and an opposite second surface;
- cutting at least said adhesive layer of said first laminate so that its shape substantially corresponds to that of said substrate, wherein said cutting is carried out by means of a laser beam; and
- bonding said second surface of said adhesive layer to said second surface of said substrate.

In accordance with a second aspect, the present invention provides a method for manufacturing an optical storage medium from which information can be read out and/or into which information can be recorded by means of a beam of electromagnetic radiation, said optical storage medium comprising at least one substrate and at least one pressure sensitive adhesive layer, said method comprising the steps of:
- proving a first laminate comprising said at least one pressure sensitive adhesive layer having a first adhesive surface and an opposite second adhesive surface and an additional layer applied to said first surface of said adhesive layer;
- providing said at least one substrate of said optical storage medium having a first surface and an opposite second surface;
- bonding said second surface of said adhesive layer to said second surface of said substrate; and
   cutting at least said adhesive layer of said first laminate so that its shape substantially corresponds to that of said substrate, wherein said cutting is carried out by means of a laser beam.

In accordance with both the first and the second aspect, said first laminate may be cut completely or alternatively only said adhesive layer of said first laminate may be cut during said cutting step.

Preferably, said additional layer applied to said first surface of said adhesive layer comprises a cover film, or a laminate of a cover film and a protective film, or a first surface release liner.

In accordance with a preferred embodiment of the present invention, said laminate is provided with a second surface release liner on said second surface of said adhesive layer, wherein said second surface release liner may be removed prior to said bonding step.

The method of both the first and the second aspect may further comprise the steps of removing said first surface release liner after said cutting step and said bonding step so that said first surface of said adhesive layer is exposed, providing a cover film, cutting said cover film so that its shape substantially corresponds to that of said substrate and said adhesive layer provided on the second surface thereof, and bonding said cover film to said first surface of said adhesive layer.

The method of both the first and the second aspect may also comprise the further steps of removing said first surface release liner after said cutting step and said bonding step so that said first surface of said adhesive layer is exposed, providing a second laminate comprising a cover film and a protective film, cutting said second laminate so that its shape substantially corresponds to that of said substrate and said adhesive layer provided on the second surface thereof, and bonding the cover film of said second laminate to said first surface of said adhesive layer.

The above-mentioned method may be modified in that said bonding step of said cover film and/or said second laminate is carried out prior to said cutting step of said cover film and/or said second laminate. Preferably, said cutting step of said cover film and/or said second laminate is carried out by laser cutting.

In accordance with a preferred embodiment, the protective film is provided removably. Preferably, said first surface release liner is a high release liner and said second surface release liner is a low release liner.

Moreover, it is preferred that said second surface of said optical storage medium is formed as a first storage information layer comprising lands and grooves. A second storage information layer comprising lands and grooves may be formed on the surface of the cover film facing the first surface of said adhesive layer.

The substrate is preferably provided by injection molding.

Fumes generated during laser cutting are preferably exhausted such that the adhesive layer and/or cover film is/are not affected by said fumes.

In a preferred embodiment, said cutting step(s) is/are carried out by means of a deflection mirror system while said laminate(s) and/or said substrate are moving. The produced optical storage medium may preferably be a DVD or a DVR.

In accordance with a third aspect, the present invention provides a method for providing a multilayer material, said multilayer material comprising at least one substrate, at least one pressure sensitive adhesive layer and at least one other layer, said method comprising the steps of:
- providing said at least one other layer of material;
- cutting said at least one other layer of material so that its shape substantially corresponds to that of said substrate and said adhesive layer provided thereon, wherein said cutting is carried out by means of a laser beam; and
- bonding said at least one other layer of material to said adhesive layer.

In accordance with a fourth aspect of the present invention, the above-mentioned third aspect may be modified in that said bonding step of said at least one other layer is carried out prior to said cutting step of said at least one other layer.

In accordance with both the third and the fourth aspect, said at least one other layer of material preferably comprises a cover film or a laminate of a cover film and a protective film. Furthermore, in accordance with these aspects, said multilayer material provided by said method is used in a method in accordance with the first or second aspect with their preferred embodiments as described above.

In accordance with a fifth aspect, the present invention provides a system for manufacturing an optical storage medium from which information can be read out and/or into which information can be recorded by means of a beam of electromagnetic radiation, said optical storage medium comprising at least one substrate and at least one pressure sensitive adhesive layer, the system comprising:
- means for providing a first laminate comprising said at least one pressure sensitive adhesive layer having a first adhesive surface and an opposite second adhesive surface and an additional layer applied to said first surface of said adhesive layer;
- means for providing said at least one substrate having a first surface;
- means for bonding said first laminate to said first surface of said substrate; and
- laser cutting means for cutting at least said adhesive layer of said first laminate so that its shape substantially corresponds to that of said substrate.

Said laser cutting means is preferably adapted to cut said first laminate completely or only said adhesive layer of said first laminate. Furthermore, said system preferably comprises means for peeling off a second surface release liner provided on the second surface of said adhesive layer and/or means for peeling off said additional layer.

In accordance with the fifth aspect, the system may comprise means for providing a cover film and/or a protective film and bonding said cover film and/or said protective film to said first surface of said adhesive layer, upon removal of said additional layer. The system preferably comprises laser cutting means for cutting said cover film and/or said protective film so that their shape substantially corresponds to that of said substrate.

Moreover, the system may preferably comprise a pair of opposing rolls, wherein said adhesive layer, said additional layer, said cover film and/or said protective film are laminated by means of said pair of opposing rolls. Preferably, the system comprises means for exhausting fumes generated during laser cutting. The system preferably also comprises a deflection mirror system being adapted to carry out said laser cutting during movement of said laminate and/or said substrate. Said laser cutting means is preferably a CO₂ laser or a NdYAG laser. Said laser cutting means may be pulsed at frequencies between 2 and 8 kHz, more preferably about 5 kHz. Preferably, said laser cutting means has a cutting speed between 50 and 500 mm/s, more preferably between 100 and 400 mm/s, and even more preferably between 150 and 300 mm/s. Said laser cutting means is preferably adapted to apply energy at a level between 40 and 400 J/m, more preferably between 60 and 250 J/m, and most preferably about 150 J/m.

In accordance with a sixth aspect, the present invention provides an optical storage medium from which information can be read out and/or into which information can be recorded by means of a beam of electromagnetic radiation, said optical storage medium comprising at least one substrate having on one surface thereof at least one first information storage layer and at least one radiation-transmissive cover film, wherein said cover film is bonded to said surface of said substrate by means of a radiation-transmissive pressure sensitive adhesive layer, and wherein the outer and/or inner circumferential shape of at least said adhesive layer is obtained by laser cutting so as to substantially conform to the circumferential shape of said substrate and/or said cover film.

When more than one cover film is provided, said cover films of the optical storage medium in accordance with the sixth aspect are preferably bonded to each other by means of one or more laser cut light-transmissive pressure sensitive adhesive layers. Preferably, said light-transmissive pressure sensitive adhesive layer and said at least one cover film have an essentially coextensive border line. It is preferred that at least one second information storage layer is provided on the surface of the cover film facing said adhesive layer. The optical storage medium in accordance with the sixth aspect may preferably be a DVD or a DVR.

The present invention is based on the finding that the manufacturing of optical storage media can be substantially improved by using at least one pressure sensitive adhesive layer for laminating the medium, and cutting the at least one adhesive layer with a laser beam. Accordingly, there are presently two generally preferred solutions for the lamination process: (i) laser cutting after lamination, and (ii) laser cutting before lamination. In the first process the pressure sensitive adhesive and an additional layer are laminated onto the surface of the substrate, and the adhesive and optionally also the additional layer are then cut by the laser beam directly on the surface of the substrate at the inner and/or outer edges. Because the pressure sensitive adhesive (PSA) at the edges is burned there is no risk of sticky edges. Subsequently, the additional layer, e.g. a liner, has to be removed from the adhesive layer, e.g., by means of an adhesive tape or a vacuum device, so that the manufacturing of the optical storage medium can be completed. In the second process the adhesive is cut on top of the additional layer, e.g. a liner, before it is applied to the substrate. Subsequently the pressure sensitive adhesive and the additional layer are laminated onto the substrate. After lamination the additional layer with any surplus adhesive is removed. An advantage of this second process is that no additional means are necessary for removing the additional layer, e.g. a liner, with the surplus adhesive from the substrate. On the other hand, the lamination requires a higher precision in order to match the PSA and the substrate during lamination.

Generally, the advantages of the laser cutting in comparison to the conventional die-cutting process is that the laser generates a real gap, while the die-cut only creates a wedge shaped indent. Furthermore, the adhesive layer does not require a second liner for the adhesive. This gives an option for a lower price product. The speed of the laser cutting process fits very well to the bonding operation, while a rotary die-cutting runs optimal only at very high speeds. Furthermore, with laser cutting no wear of any die-cutting tool exists and no reworking of cutting tools is necessary. Moreover, there are no problems with sticking of adhesives to the die-cutting tool which usually have to be cooled, lubricated and/or coated with anti-adhesive materials. All known processes using die-cutting tools are subject to wear and contaminations. The laser cutting also provides total freedom of shape of the cut product, while die-cutting is carried out with one specific cutting tool which has to be changed for any new shape.

While the present invention is primarily described in connection with a method for manufacturing an optical storage medium it can generally be applied to methods for providing any multilayer material comprising at least one substrate, at least one pressure sensitive adhesive layer and at least one other layer.

### Brief description of the drawings

In the following preferred embodiments of the present invention will be described with reference to the drawings, in which:
- Figures 1a and 1b: show two different embodiments of an optical storage medium according to the present invention, wherein in the embodiment of Figure 1a a single storage information layer is provided, and in the embodiment of Figure 1b two information storage layers are provided, one on the substrate and the other on the cover film which preferably has a configuration similar or identical to the substrate;
- Figure 2: shows the generation of a laminate comprising a cover film with a protective film one side and a pressure sensitive adhesive layer with a release liner on the other side;
- Figure 3: shows one embodiment of the cutting of the pressure sensitive adhesive layer and the cover film with a laser beam;
- Figure 4: illustrates an example of some details of the bonding process for manufacturing an optical storage medium according to the present invention;
- Figures 5A to 5K: schematically show various processes and systems for manufacturing an optical storage medium according to the present invention;
- Figure 6: shows a conventional laminate that has been cut with a mechanical cutting tool;
- Figure 7: shows a laminate that has been cut with a laser beam according to the present invention; and
- Figures 8 to 14: show light microscopical images of laser cuts through liner/PSA/liner constructions which have been embedded in epoxy resin, wherein the laser power has been varied.

### Detailed description of the preferred embodiments

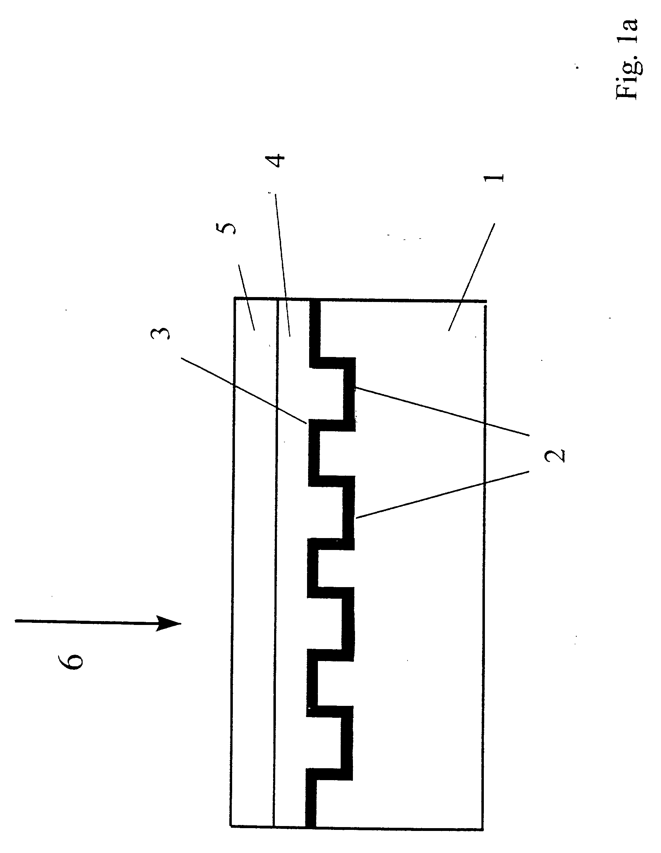

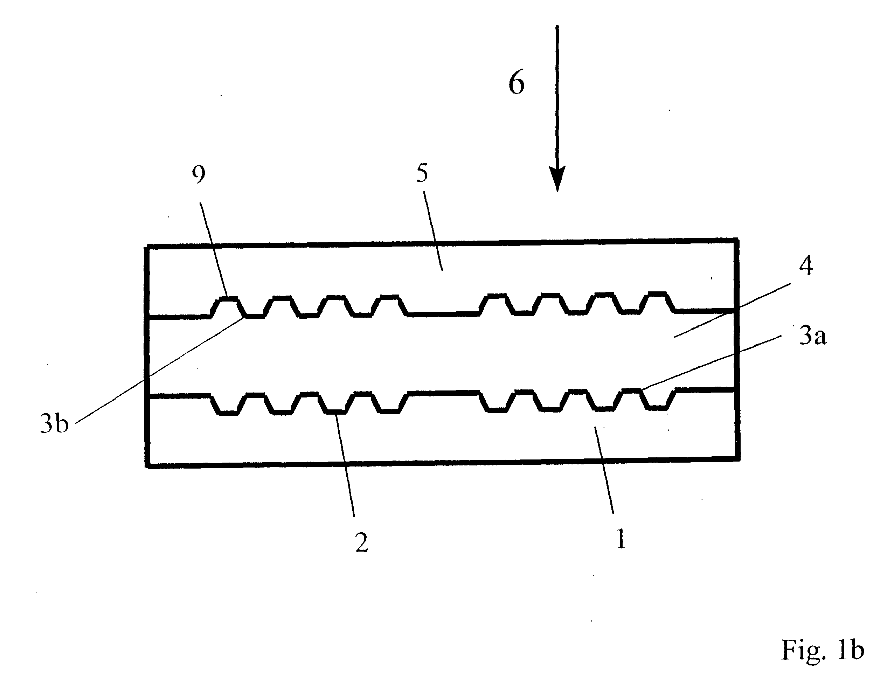

As shown in Figures 1a and 1b, the optical storage medium of the present invention comprises at least one substrate 1 bearing on a surface 2 thereof on which a light beam 6 is incident, one ore more information storage layers 3 which may be readable and/or recordable, at least one light-transmissive pressure sensitive adhesive layer 4 and at least one light-transmissive cover film 5.

Fig. 1a shows as an example a schematic representation of a cross-sectional view of a specific embodiment of an optical storage medium according to the present invention comprising the substrate 1 exhibiting on its major surface 2 on the side where the light beam 6 is incident upon, a structure of lands and grooves which forms part of the information storage layer 3. The information storage layer 3 bears the pressure-sensitive adhesive layer 4 to which the light-transmissive cover film 5 is bonded.

More complex constructions of optical storage media which may be useful in the present invention are described, for example, in EP-A-0 867 873 which is incorporated herein by reference. The optical storage media may comprise, for example, two or more information storage layers 3 arranged above each other on one or two, respectively, major surfaces of the substrate. Fig. 1b schematically shows a construction comprising two information storage layers 3a, 3b applied to the inner surface 2 of the substrate 1 and the inner surface 9 of the light-transmissive cover film 5, respectively. In this case the configuration of the light-transmissive cover film 5 is preferably similar or identical to the substrate 1, however, being light-transmissive.

The substrate 1 may be of any shape but preferably is a disc exhibiting a center hole useful for centering the assembled optical storage medium in a recording or playing station. The disc or annulus shaped substrates preferably have an outer diameter of about 10 to about 360 mm and an inner diameter of the center hole of about 5 to about 35 mm, and the thickness preferably is between 0.3 and 3.0 mm and especially preferably between 0.5 and 1.5 mm. The substrate preferably comprises polymeric materials such as, for example, acrylic resins, polycarbonates, epoxy resins, cyclic olefin copolymers and polyolefins. Especially preferred are hard plastics such as polymethylmethacrylates, polycarbonates or thermally stable polyester cocarbonates.

The substrate may comprise on one or both, respectively, of its major surfaces a structure comprising concave portions (or grooves) and convex portions (or lands) which are usually collectively referred to as pits. Typical dimensions of pits including a relation between the wavelength of the light, the refractive index of the light-transmissive layer and the depth of a groove in order to minimize optical crosstalk between consecutive lands and grooves are disclosed, for example, in EP-A-0 874 362 or EP-A-0 867 873 which are incorporated herein by reference. The track pitch which is the distance between the centerline of adjacent physical tracks as measured in radial direction is typically in the range of 0.3 to 1.6 µm.

The structure of pits can be molded into one or both, respectively, surfaces of the substrate or members. This process, which is described in detail in EP-A-0 729 141, usually comprises a master disc-forming step and an injection molding step; EP-A-0 729 141 is incorporated herein by reference. It is also possible, however, that a structure of pits is obtained in the light-transmissive cover film by passing the light-transmissive cover film which is heated to a temperature above its glass transition temperature between two rollers at least one of them exhibiting a patterned structure. This technique is shown schematically in Fig. 10 of EP-A-0 867 873 where the light-transmissive cover film is passed between a roll and a stamper. The light-transmissive cover film thus obtained can be bonded to the substrate or to one or more other light-transmissive cover films optionally bearing a structure of pits, by means of a pressure-sensitive adhesive layer so that optical storage media having a multiplicity of information storage layers can be obtained.

The construction of the information storage layer 3 depends on whether it is to allow for read out and/or recording.

If the optical storing layer is of ROM type, the information storage layer 3 may comprise the structure of pits bearing a reflective film of Al, Au or the like with a thickness of typically between 20 - 60 nm which can be obtained, for example, by sputtering.

Recordable optical storage media may be of phase-change type or magneto-optical type. According to EP-A-0 867 873 phase-change type information storage layers may be obtained by successively forming on the structure of pits a reflective film such as an Al film, a GeSbTe film and an ZnS-SiO2 film. More complex phase-change type information storage layers are described, for example, in EP-A-0 874 362. Magneto-optical type information storage layers 3 comprise, for example, the structure of pits bearing a reflective film such as an Al film, a SiN film, a TbFeCo film and a SiN film in this order.

Information storage layers of write-once type can be obtained, for example, by applying a thin reflective film of Al, Au or other metals to the structure of pits which is then coated with a cyanin or phthalocyanine system organic pigment film.

The information storage layers described above are given by way of example only. The optical storage media according to the present invention can comprise other and/or modified constructions of information storage layers.

It was found that optical storage media with a low thickness variation, advantageous optical properties and low jitter values can be obtained by bonding such media with one or more light-transmissive pressure-sensitive adhesive layers. The present invention thus refers to optical storage media which are bonded by one or more pressure-sensitive adhesive layers while avoiding the disadvantageous UV-curable resin layers of prior art.

In the specific embodiment of the optical storage medium schematically shown in Fig.1a the pressure-sensitive adhesive layer 4 bonds the light-transmissive cover film 5 to the information storage layer 3. In more complicated constructions comprising a multiplicity of information storage layers as was described above, pressure-sensitive adhesive layers 4 can also be used to bond two or more light-transmissive cover films 5 optionally comprising an information storage layer 3, to each other.

Another optical storage media of the present invention comprises two or more information storage layers. In the specific embodiment of the optical storage medium schematically shown in Fig. 1b the pressure-sensitive adhesive layer 4 bonds a substrate 1 bearing a first information storage layer 3a to a second information storage layer 3b on a light-transmissive cover film 5 onto which the light beam 6 is incident upon.

The pressure-sensitive adhesive is required to be transparent at the wavelength of the incident light beam 6 with which the information is read out from and/or recorded into the optical storage medium. Suitable light sources to generate light beam 6 comprise lasers having, for example, emission lines in the wavelength range of between 350 - 700 nm, preferably in the area of about 400 nm. The transparency of the pressure-sensitive adhesive at the wavelength of the incident light which can be measured, for example, according to ASTM D 1746, preferably is at least 80 % and more preferably at least 85 %.

The adhesive layer may comprise a transparent backing and/or carrier layer such as, for example, optionally surface-treated, amorphous polymer layers such as polyethylene terephthalate (PET), polycarbonate or polymethylmethacrylate (PMMA) layers carrying on each side an adhesive layer, but preferably it is a transfer film comprising no backing and/or carrier layer. In case of a transfer film, the adhesive layer preferably has an average thickness of between 10 - 100 µm, more preferably, of between 15 - 80 µm, and especially preferably of between 15 - 50 µm, wherein double-sided adhesive tapes comprising a backing and/or carrier layer have a thickness in the same range.

The optical transparency requirements are generally fulfilled by acrylate-based pressure-sensitive adhesives, but silicone-based pressure-sensitive adhesives, rubber resin-based pressure-sensitive adhesives, block copolymer-based adhesives, especially those comprising hydrogenated elastomers, or vinylether polymer-based pressure-sensitive adhesives can also be used. Any of these materials may be compounded with plasticizers and/or tackifiers to tailor their properties. Acrylate-based pressure-sensitive adhesives are preferred.

Acrylate-based pressure-sensitive adhesives which are useful in the present invention can be obtained by polymerization of precursors comprising one or more alkyl acrylates the alkyl groups of which have an average of 4 - 14 atoms. The term average of 4 - 14 atoms means that the average number of carbon (C) atoms of the alkyl acrylate compounds, weighed by their respective percentage by weight with respect to the mass of the alkyl acrylate component, is between 4 - 14 and, in particular, between 4 - 12 C atoms. Useful alkyl acrylates (i.e., acrylic acid alkyl ester monomers) include linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates used in the invention include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate. Preferred lower acrylate and methacrylate esters include isooctyl acrylate, n-butyl acrylate, 2ethylhexyl acrylate, isononyl acrylate and dodecyl acrylate. The polymerizable precursor of the pressure-sensitive adhesive preferably contains up to 5 and, in particular, 1 - 4 alkyl acrylates. The average number of carbon atoms in the alkyl groups of the alkyl acrylates as defined above, preferably is between 4 - 12 and very particularly between 5 - 10. Blends of different alkyl acrylates may also be used.

The polymerizable precursor of the pressure-sensitive adhesive can furthermore contain alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate, are preferred. The amount of ester compounds of unsaturated aliphatic carboxylic acids other than acrylic acid preferably is not too high and preferably does not exceed 25 wt. % with respect to the mass of the alkyl acrylate component.

The polymerizable precursor of the pressure-sensitive adhesive can furthermore contain one or more moderately polar and/or strongly polar monomers. Polarity (i.e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269- 280. Examples for strongly polar monomers are acrylic acid, methacrylic acid and acrylamides while N-vinyl lactams, such as, for example, N-vinyl pyrrolidone and N-vinyl caprolactam, acrylonitrile and dimethyl amino-propyl methacrylate are typical examples of moderately polar monomers. Examples for poorly polar monomers include, for example, iso-bornyl acrylate, vinyl acetate, N-octyl acrylamide, t-butyl acrylate, methyl acrylate, methylmethacrylate or styrene. It was found, however, that when the inner surface of at least one of the members comprises a corrosive layer such as, for example, an Al reflective layer, the percentage of strongly polar monomers is preferably less than about 10 % by weight and, more preferably, less than about 5 % by weight with respect to the mass of the acrylate monomers. The pressure-sensitive adhesive should preferably be essentially free of acrylic acid in order to avoid severe damaging of the inner surface of the members by corrosion.

Acrylate-based pressure-sensitive adhesives which are useful in the present invention are described, for example, in US-A-4 181 752, US-A-4 418 120, WO-A-95/13331 or in Handbook of Pressure-sensitive Adhesive Technology; D. Satas ed.; Second Edition, New York 1989, pp. 396 - 491. These references are incorporated herein by reference.

The pressure-sensitive adhesive layers useful in the present invention may comprise further components such as, for example, polymer additives, thickening agents, tackifiers, chain transfer agents and other additives provided that they do not reduce the transparency of the pressure-sensitive adhesive or adversely affect the uniformity of the thickness of the pressure-sensitive adhesive layer to an undesirable and/or unacceptable degree. The amount of such additive preferably is not more than 5 wt. % and more preferably between 0 - 2 wt. % with respect to the mass of the pressure-sensitive adhesive.

Pressure-sensitive adhesives which are useful in the present invention preferably exhibit a modulus G' (measured at a temperature of 23° C and a frequency of 1 radian/second) of between 5x10⁵ to 2x10⁶ dyne/cm², more preferably of between 6x10⁵ to 1.5x10⁶ dyne/cm² and especially preferably of between 6.5x10⁵ to 9.5x10⁵ dyne/cm².

The pressure-sensitive adhesive layer can be prepared by coating the pressure-sensitive adhesive layer as an organic or aqueous solution or dispersion onto an additional layer, e.g. a release liner, with subsequent evaporation of the solvent and optional curing, or as an essentially solvent-free, prepolymerized syrup with subsequent curing. The latter method is described in some detail, for example, in US-A-4 181 752 whereas coating of a solution or dispersion of the pressure-sensitive adhesive is described, for example, in Handbook of Pressure-sensitive Adhesive Technology; D. Satas ed.; Second Edition, New York 1989, pp. 767 - 868 (incorporated herein by reference). The pressure-sensitive adhesive layer can also be applied by hot-melt coating. The exposed surface of the pressure-sensitive adhesive layer is usually protected with a second release liner prior to or after curing.

It was found that the thickness of the pressure-sensitive adhesive layer has to be carefully controlled in order to allow for the preparation of very uniform optical recording media. It was found that the variation of the thickness of the optical recording medium introduced by the pressure-sensitive adhesive layer, preferably is not more than about ± 3 µm and more preferably not more than about ± 2 µm as measured across an arbitrarily selected cross-section of the optical recording medium over its entire extension using the method of measurement described in the test section below.

A preferred method of preparing very flat, uniform precision caliper pressure-sensitive adhesive layers which fulfill these requirements, is described, for example, in WO-A-95/29766 incorporated herein by reference. The method comprises coating of an essentially solvent-free, polymerizable, syrupy precursor of the pressure-sensitive adhesive through a die onto the surface of a substrate as the substrate moves relative to the die. The die includes a channel adapted to receive the precursor of the pressure-sensitive adhesive and an adjustable width slot in communication with said channel through which the precursor is passed. The slot is formed between a substantially straight, sharp edge located on the downstream side of the substrate and a land located on the upstream side of the substrate. The die coating method and the precision coating die are described in more detail in WO-A-95/29764 and WO-A-95/29765 (incorporated herein by reference). This method can be used, for example, to coat essentially solvent-free, prepolymerized, syrupy precursors of acrylate-based pressure-sensitive adhesives onto a moving belt or a release liner with subsequent curing of the pressure-sensitive adhesive layer. The pressure-sensitive adhesive layer may be directly transferred after curing from the moving belt onto the inner surface of the first member of the optical recording medium, or it may be temporarily stored between release liners prior to application to the inner surface of the first member. When using a moving belt or a release liner with an essentially flat and smooth surface with a surface roughness R_{z} as defined below of less than 2 µm, very homogenous pressure-sensitive adhesive layers with a thickness tolerance of ± 3 µm or less, preferably of about ± 2 µm or less can be obtained. These adhesive layers can be used for the preparation of very uniform optical recording media, and the thickness tolerance introduced by the pressure-sensitive adhesive layer into the optical recording medium is typically ± 3 µm or less.

The refractive index of the pressure-sensitive adhesive layer preferably is adapted to the refractive index of the light-transmissive cover film. The difference in the refractive indices of the light-transmissive cover film and the pressure-sensitive adhesive layer preferably is not more than 0.05 and more preferably less than 0.02. The refractive index of pressure-sensitive adhesives which can be measured, for example, according to ASTM D 542, preferably is at least 1.45 and more preferably at least 1.49. It was found that acrylate-based pressure-sensitive adhesive layers with a refractive index of at least about 1.50 which are useful in the present invention, can be obtained by including a sufficient amount of, for example, phenoxy ethyl acrylate into the polymerizable precursor.

The optical storage media of the present invention comprise one or more light-transmissive cover films which each optionally exhibit on one or both of their major surfaces a structure of pits. The thickness of the light-transmissive cover film preferably is between 10 and 150 µm, more preferably between 50 and 130 µm and especially preferably between 60 and 110 µm. In more complicated constructions of the optical storage medium of the present invention comprising two or more light-transmissive cover films, the thickness of each cover layer preferably is between 10 and 70 µm and more preferably between 20 and 60 µm.

The maximum thickness of the sum of the thicknesses of the light-transmissive cover film or films and the pressure-sensitive adhesive layer or layers of the optical storage media of the present invention can be estimated according to EP-A-0 867 873 and JP-A-3-225650 by using a relationship established in JP-A-3-225650 for CDs, between such maximum thickness, the numerical aperture of the optical head device of the optical disc recording and/or reproducing apparatus, the wave length of the light source utilized and the skew margin. When using a laser light source with a wavelength of approximately 0.65 µm, EP-A-0 867 873 suggests for the sum of the thicknesses of the light-transmissive cover film or films and the pressure-sensitive adhesive layer or layers a value of 288 µm or less whereas for a blue light layer with a wavelength of 0.4 µm a value of 177 µm or less is disclosed.

It was found that in the construction schematically shown in Fig. 1 the thickness of the pressure-sensitive adhesive layer preferably is between 15 and 100 µm and more preferably between 20 and 50 µm and the thickness of the light-transmissive cover film preferably is between 50 and 200 µm, more preferably between 50 and 100 µm and especially preferably between 50 and 85 µm. It was furthermore found by the present inventors that in more complicated constructions comprising two or more light-transmissive cover films and the corresponding number of pressure-sensitive adhesive layers, the sum of the thickness of such light-transmissive cover films and pressure-sensitive adhesive layers preferably is less than 300 µm and more preferably less than 250 µm.

It was further found that the light-transmissive cover film or films preferably are highly optically isotropic in order to minimize any distortion of the light beam passing such layer or layers.

The in-plane birefringence of the light-transmissive cover film or films preferably each is less than ± 30 nm/d where d is the thickness of the respective light-transmissive cover film, more preferably less than ± 25 nm/d and especially preferably less than ± 15 nm/d.

It was also found that light-transmissive cover films with the required low value of birefringence can preferably be obtained by casting
(i) a solution of one or more suitable polymers with subsequent drying, and/or
(ii) an unpolymerized or partially prepolymerized precursor of the respective polymer with subsequent polymerization.

Preparation of the light-transmissive cover film by solvent-casting includes dissolving of the polymer in a solvent, coating of the solution onto a smooth substrate and solidifying the polymer by evaporization of the solvent. Preferred polymers include, for example, polycarbonate, cellulose triacetate and polydicyclopentadiene. Suitable solvents include, for example, dichloromethane, dioxolane, cyclohexanone, tetrahydrofurane and dioxane.

Preparation of the light-transmissive cover film by polymerization-casting includes preparation of a coatable, syrupy precursor which typically comprises the solution of a partially polymerized, curable precursor of the polymer in excess monomer or oligomer. This solution is then cast on a smooth substrate with subsequent polymerization to provide the light-transmissive cover film. This technique allows for the formation of homopolymers or copolymers. Preferred monomers include, for example, (methyl)methacrylate, (methyl)ethylacrylate, or (methyl)propylacrylate, lower amounts of (methyl) (C₄ - C₈ alkyl) acrylates, acrylonitrile or styrene. The degree of prepolymerization is preferably chosen as to provide an easily coatable precursor having a viscosity of, for example, between 0.3 and 200 Pa·s.

The thickness of the cast layer is preferably carefully controlled in order to allow for the preparation of very uniform light-transmissive cover films. It was found that the variation of the thickness of the light-transmissive cover film preferably is not more than ± 3 µm and more preferably not more than ± 2 µm as measured across an arbitrarily selected cross-section of the optical recording medium over its entire extension using the method of measurement described in the test section below.

It was found that the preparation of very flat, uniform precision caliper light-transmissive cover films can preferably be obtained by using the die coating method and the precision coating die described in WO-A-95/29764 and WO-A-95/29765 cited above. This method can be used, for example, to coat partially prepolymerized, syrupy precursors of the polymer of the light-transmissive cover film or solutions of such polymer, respectively, onto a moving belt or drum or a release liner with subsequent curing of the precursor and/or drying of the solution, respectively. The light-transmissive cover film thus obtained may be directly transferred after curing or drying, respectively, from the moving belt onto the exposed pressure-sensitive adhesive layer. When using a moving belt or a release liner with an essentially flat and smooth surface with a surface roughness R_{z} as defined below of less than 2 µm, very homogenous light-transmissive cover films with a thickness tolerance of about ± 3 µm or less, preferably of about ± 2 µm or less can be obtained. Suitable belts or drums, respectively, with the required smooth surfaces comprise, for example, highly polished stainless steel surfaces. Preferably the light-transmissive cover film is obtained by casting a solution of a suitable polymer and/or a polymerizable precursor on a moving belt or a release liner having a low surface energy of preferably less than about 35 dynes/cm. It is disclosed in EP-A-0 380 028 which is incorporated herein by reference that casting of polymer solutions on such surfaces allows for the manufacture of low birefringence polymer films. Suitable low surface energy materials comprise, for example, poly(tetrafluoroethylene), poly(vinylidene fluoride), poly(trifluorochloroethylene), polyethylene, poly(tetrafluoroethylene) and poly(vinylidene fluoride) being especially preferred.

In a preferred method, a multilayer film comprising at least one pressure-sensitive adhesive layer and at least one other layer, e.g. a light-transmissive cover film, can be obtained by subsequent casting steps. In this method, a release liner with a smooth surface is provided first, and the other layer, e.g. the light-transmissive cover film 5, is applied to such release liner by solvent-casting or polymerization casting, respectively, with subsequent drying or curing, respectively, as was described above. The curable precursor of a pressure-sensitive adhesive is coated on the exposed surface of the other layer, e.g. the light-transmissive cover film 5 with subsequent curing, as is described above. Following the bonding of said pressure sensitive adhesive to said other layer of material, said other layer is cut by means of a laser beam so that its shape substantially corresponds to that of said pressures sensitive adhesive layer 4. The resulting multilayer film material can, for example, be directly laminated onto the information storage layer 3 formed on the pits exhibiting surface 2 of a base member or substrate 1, if desired, with subsequent removal of the release liner to provide the optical storage medium according to Fig. 1a. Alternatively, a release liner may be laminated to the exposed surface of the pressure-sensitive adhesive layer followed by the removal of the release liner from the light-transmissive cover film and, optionally, the lamination of a releasable protective layer to the light-transmissive cover film.

It was found that it is desirable to laminate a releasable protective film 7 to at least one major surface of the light-transmissive cover film 5 in order to protect the surface of the light-transmissive cover film during handling and mounting of the optical storage media.

A wide variety of polymer films optionally bearing a pressure-sensitive adhesive layer can be used as releasable protective film 7. Useful polymer films which can be used in conjunction with a pressure-sensitive adhesive layer comprise, for example, polyolefin films including homopolymers such as polyethylene or polypropylene films, copolymers such as ethylene/propylene copolymers and mixtures of homopolymers or copolymers such as mixtures of polyethylene and polypropylene, polyethylenterephthalate films or polyurethane films like, for example, extendable elastomeric polyurethanes of the polyetherurethane or polyesterurethane type. It is also possible to use laminates of at least two polymer films the lower exposed film of which being bonded to the light-transmissive cover film 5, exhibiting self-adhering properties. Suitable examples of polymers with self-adhering properties included EVA films (polyethylenevinylacetate) having a high vinyl acetate content of, for example about 5 - 20 wt. % with respect to the mass of the EVA polymer. Such laminates can be used as releasable protective films 7 without a pressure-sensitive adhesive layer.

The pressure-sensitive adhesive if present is preferably selected so that it can be easily removed from the light-transmissive cover film 5 without leaving behind any residual adhesive. It was found that the pressure-sensitive adhesive is preferably selected so that the 90° peel adhesion from a polycarbonate substrate as measured according to PSTC method PSTC-3 is not more than 1 N/2.54 cm, preferably not more than 75 cN/2.54 cm and especially preferably less than 50 cN/2.54 cm. Suitable acrylate based removable adhesives which exhibit a low peel adhesion strength and a high cohesive strength which are useful for the preparation of releasable protective films are described, for example, in US-A-4 166 152 incorporated herein by reference. Releasable protective films 7 which are useful in the present invention are available as protective tape products from 3M; suitable example is 3M Protective Tape # 2104.

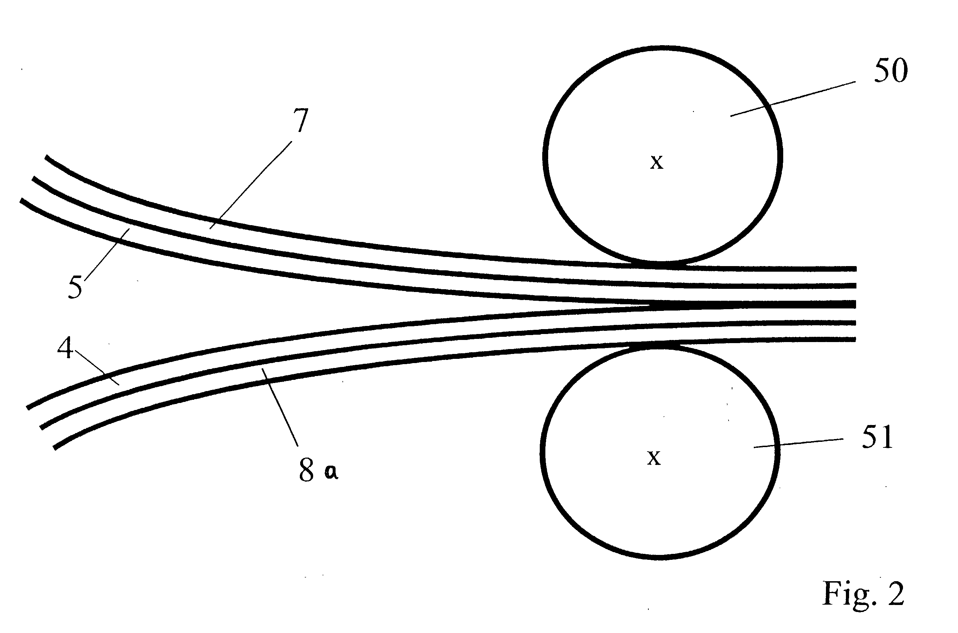

In a method of preparing an optical recording medium according to Fig. 1a, a first laminate comprising a releasable protective film 7 and a light-transmissive cover film 5 is laminated to a second laminate comprising a pressure-sensitive adhesive layer 4 and a smooth release liner 8a, between two rolls 50, 51 as is schematically shown in Fig. 2. The rolls exhibit a very smooth surface and are arranged to allow for an essentially stress-free and bubble-free lamination of the films.

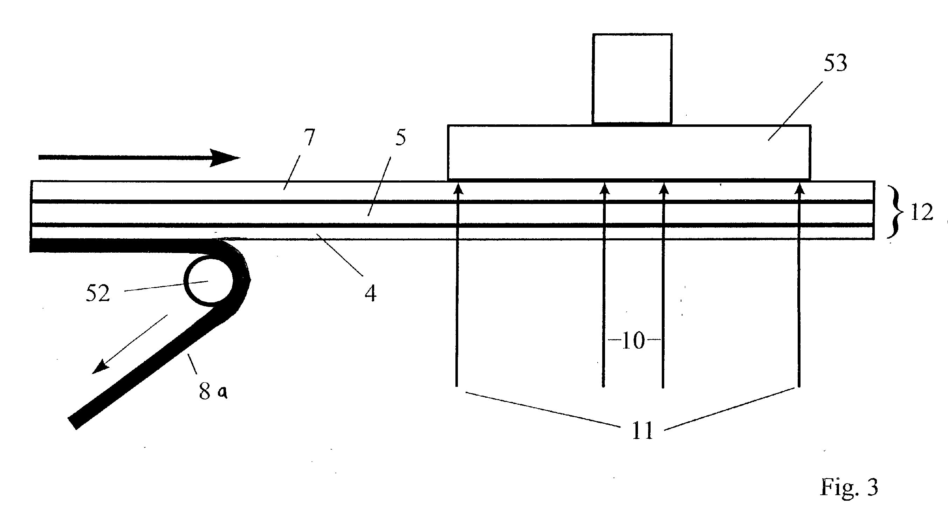

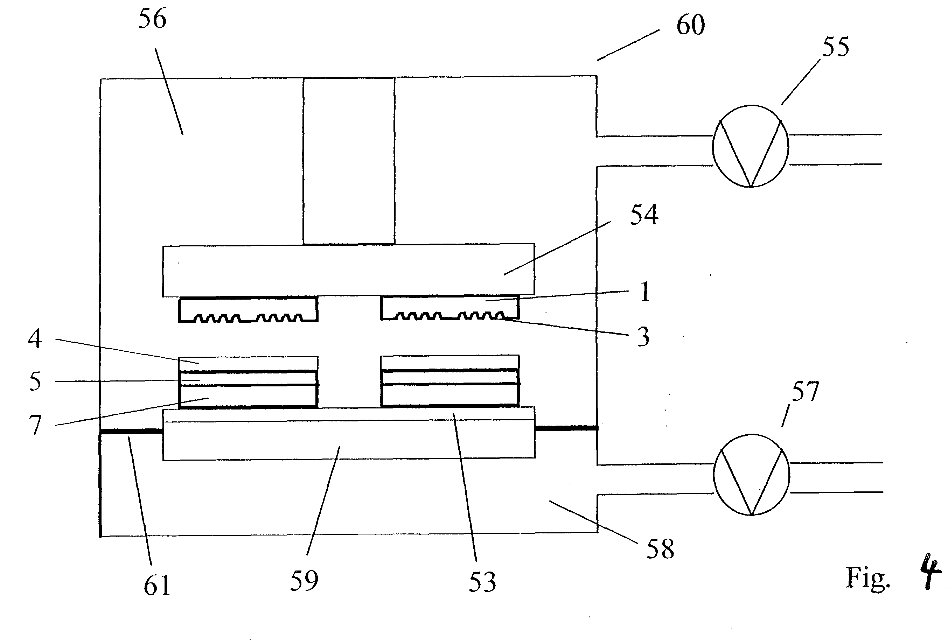

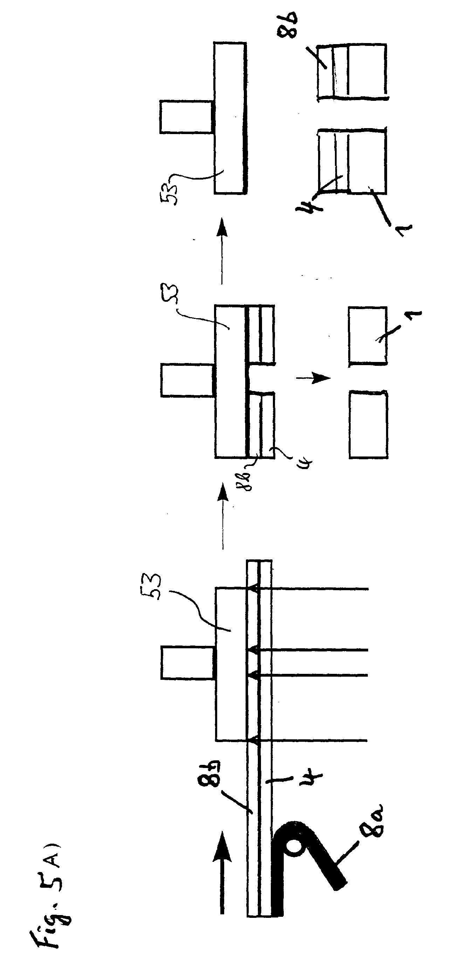

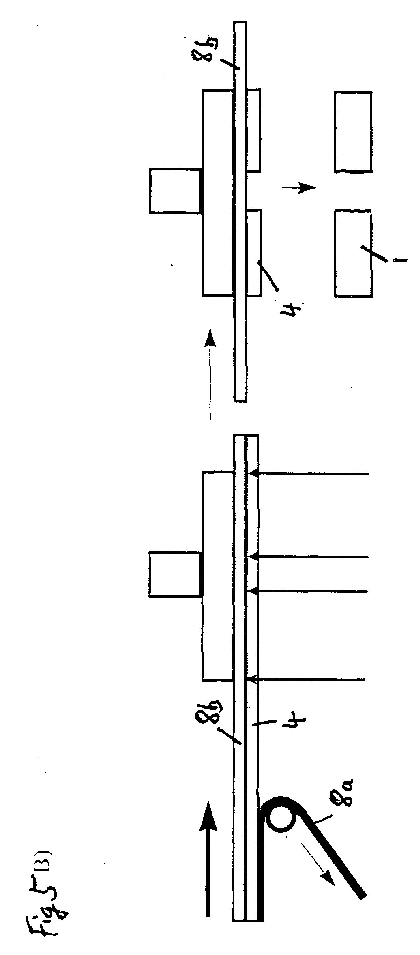

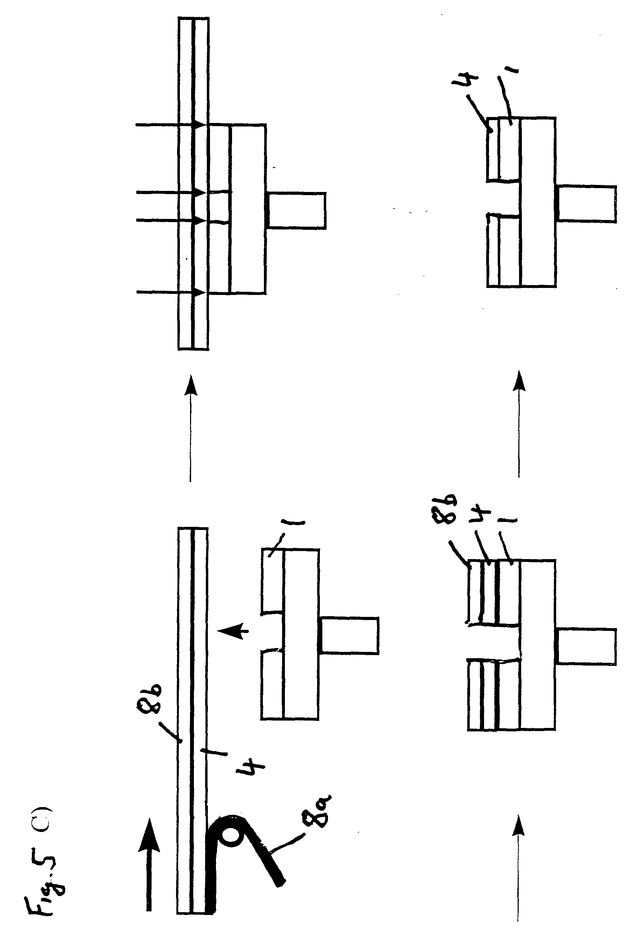

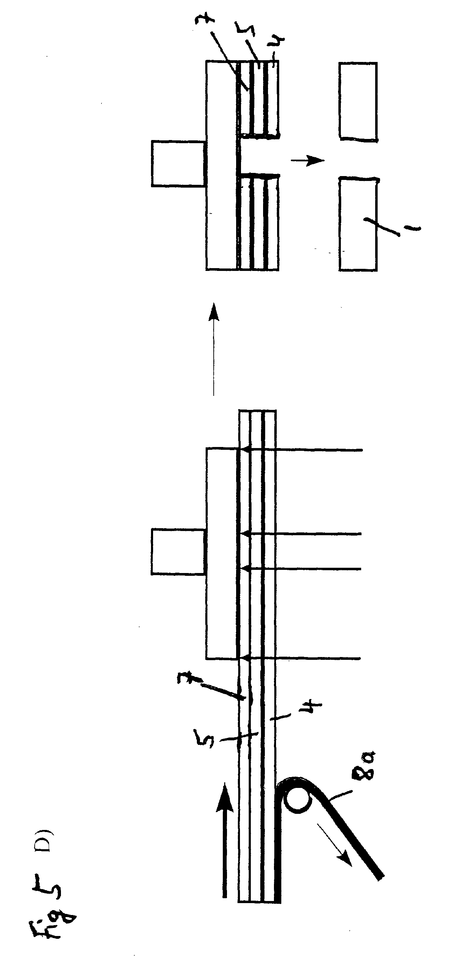

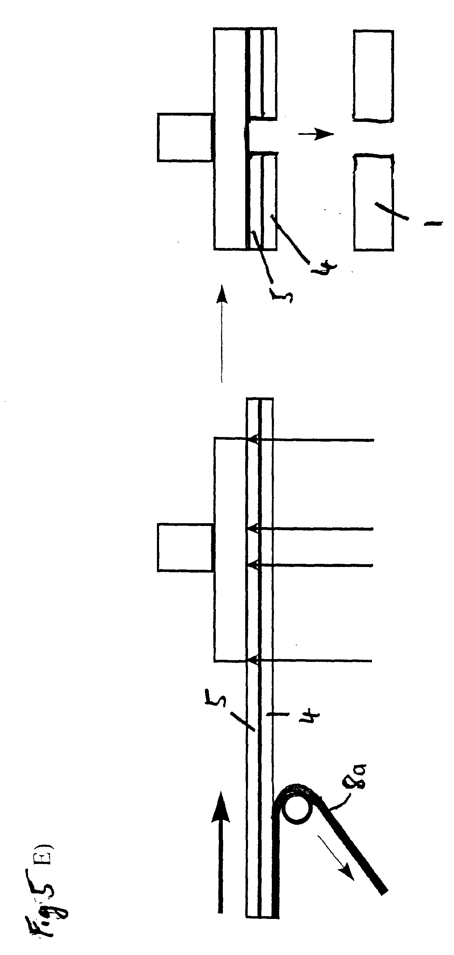

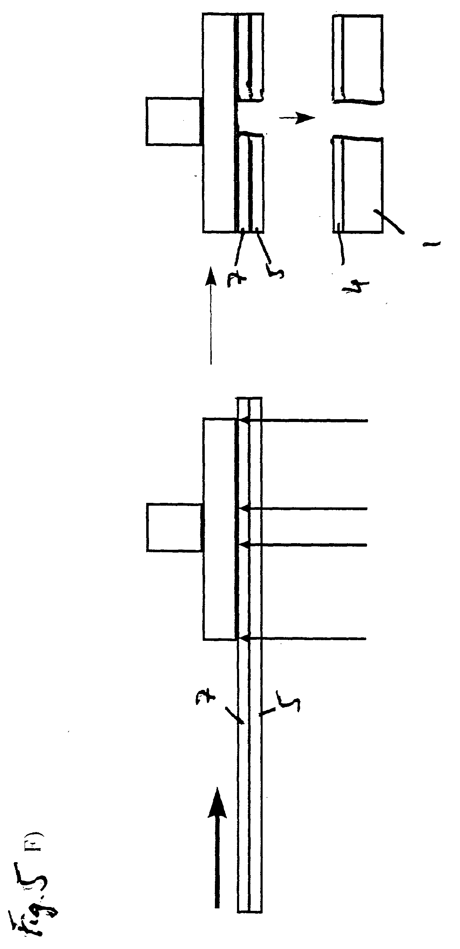

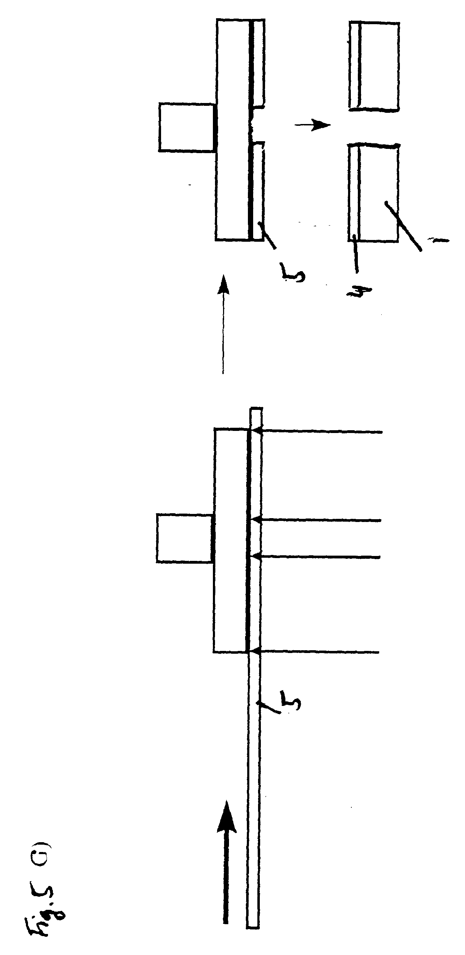

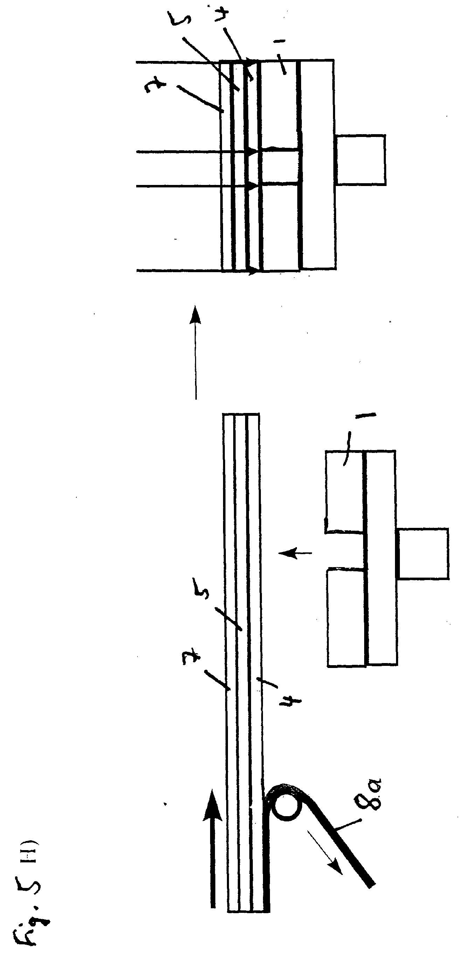

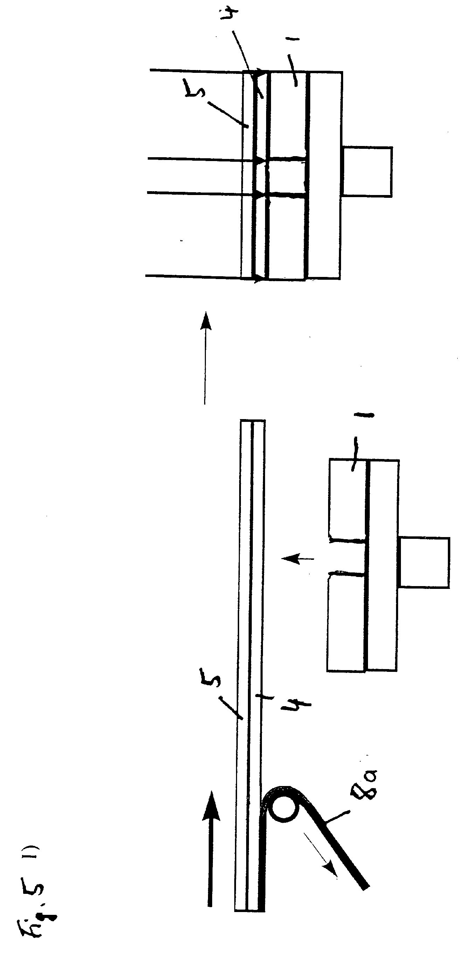

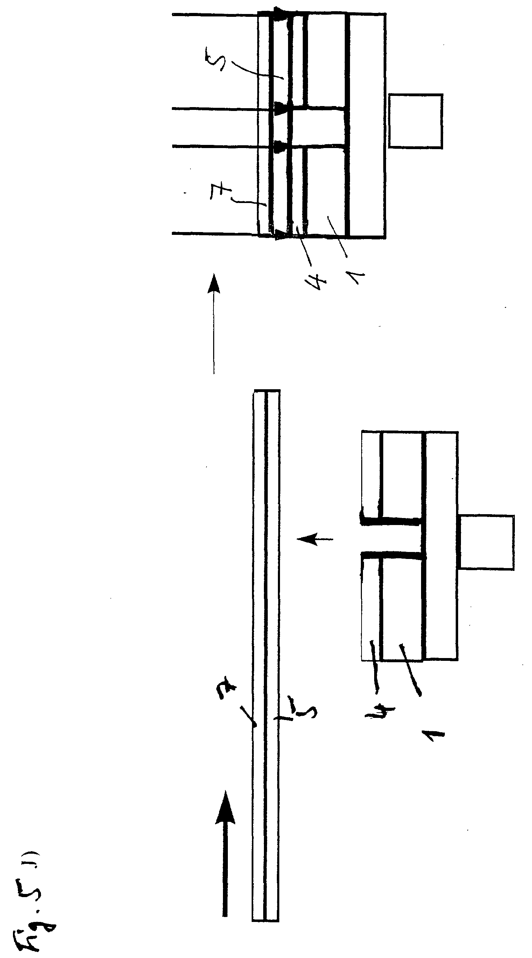

The resulting laminate is fed into a bonding station schematically shown in Fig. 3 which is operated in a quasi-continuous mode. The release liner 8a is separated from the resulting laminate, for example, by means of a dispensing edge or roll 52, and the laminate 12 comprising the adhesive layer 4, cover film 5 and protective film 7 is then attached to a vacuum plate holder 53 by air suction. The laminate is then cut by means of at least one laser beam, preferably two laser beams 10 and 11 being guided along an inner and an outer circle, respectively, such that the shape of the laminate substantially corresponds to that of a substrate 1 having an inner hole and an outer circumference The laser cutting step itself is described in more detail below. The vacuum plate holder 53 with the attached laser cut laminate is then transferred to a vacuum bonding apparatus 60 schematically shown in Fig. 4. The vacuum bonding apparatus comprises an upper vacuum chamber 56 and a bottom pressure chamber 58 which are separated by the movable bottom plate 59 and the flexible seal 61. The upper chamber 56 can be evacuated by means of pump 55, and the bottom chamber 58 can be evacuated or pressurized, respectively, by means of pump 57. The vacuum plate holder 53 is attached to the bottom plate 59 of the vacuum bonding apparatus 60 with the exposed adhesive layer 4 of the attached laminate facing up. The substrate 1 bearing the information storage layer 3 is attached to the top plate 54 of the vacuum bonding apparatus 60 with the information storage layer 3 facing down. The bottom chamber 58 is evacuated in order to keep the bottom plate 59 in a lower position during the following evacuation of the main chamber 56. The main chamber 56 of the vacuum bonding apparatus 60 is then evacuated via pump 55. The pressure in the bottom chamber 58 is then increased to a certain level via pump 57. thereby pushing the laminate against the substrate 1. Then the bottom plate 59 is driven to the lower position by evacuating the bottom pressure chamber 58. After pressurizing the main chamber 56 of the vacuum bonding apparatus 60 to atmospheric pressure, the optical storage medium according to Fig. 1a of the present invention can be removed from the vacuum bonding apparatus 60. The releasable protective film 7 is removed to give a specific embodiment of an optical storage medium according to the present invention according to Fig. 1a.

In an alternative method of preparing an optical recording medium according to Fig. 1a, the pressure-sensitive adhesive layer 4 is laminated to the information storage layer 3 formed on the pits exhibiting surface 2 of the substrate 1. The pressure-sensitive adhesive layer can be supplied, for example, as pre-cut by means of a laser beam and have the shape of the substrate. The pressure-sensitive adhesive layer is preferably attached near one edge of the substrate and then progressively laminated across the surface of the substrate, applying a lamination angle of, for example, 45° or less in order to avoid entrapment of air bubbles. The substrate 1 bearing the pressure-sensitive adhesive layer 4 can be attached to bottom plate 59 of the vacuum bonding apparatus 60 of Fig. 4. A laminate comprising a releasable protective film 7 and a light-transmissive cover film 5 is applied to the top plate. The optical recording medium is then prepared by pressurizing the bottom chamber 58 thereby pushing the bottom plate 59 to the top plate 54 as was described above.

In another method of preparing an optical recording medium according to Fig. 1a, a laminate comprising a releasable protective film 7, a light-transmissive cover film 5 and an exposed pressure-sensitive adhesive layer 4 is bonded to the exposed surface of the information storage layer 3 of the disc-shaped substrate 1 by means of a wheel-bonding device disclosed in co-pending US patent application S. N. 09/065,295 of the present applicant (incorporated herein by reference). The wheel-bonding process which is described in some detail below in Example 3, ensures a bonding almost free of air inclusions as well as a good flatness of the laminated optical storage media. At least the adhesive layer 4 of said laminate has been cut by means of a laser beam such that its shape substantially corresponds to that of said substrate 1 with the information storage layer 3, as described in detail below.

The method as described above is only exemplary and restricts by no means the scope of the present invention.

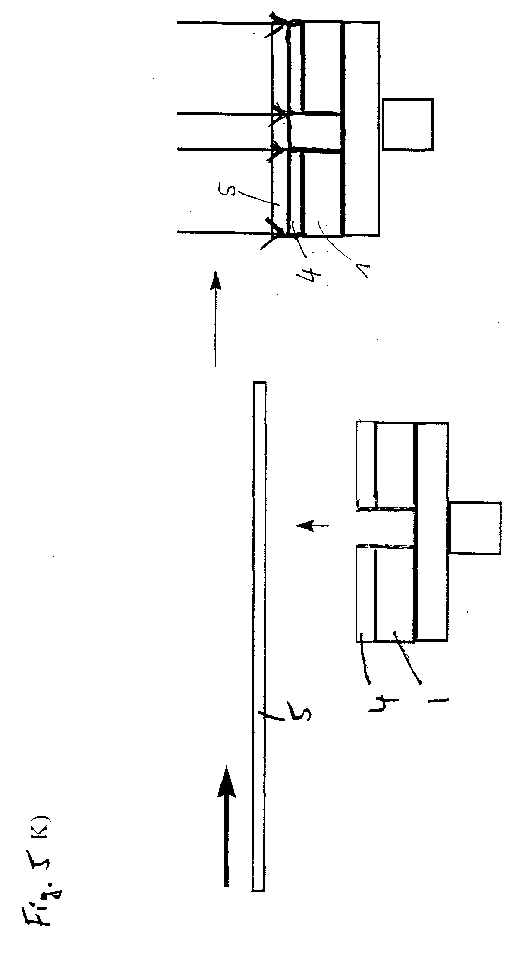

In the following, reference will be made to Figures 5A to 5K showing embodiments of methods and systems for the cutting and bonding of the various layers used in the manufacturing of an optical storage medium including the pressure sensitive adhesive layer 4, the optional cover film 5, protective film 7 and the base member or substrate 1. The selection of any of those embodiments largely depends on the different manufacturing parameters, e.g., in which way the single layers and laminates are supplied, whether it is advantageous to have one or two cutting processes etc. However, certain general aspects should be taken into account when selecting the most appropriate method.

The various steps of a first embodiment of the method and system for manufacturing an optical storage medium are illustrated in Figure 5A. As can be seen from this Figure, the method comprises the step of providing a laminate consisting of a pressure sensitive adhesive layer 4 and a release liner 8b. The pressure sensitive adhesive layer 4 has opposite first and second surfaces, wherein the release liner 8b is applied to a first surface of the adhesive layer 4. The laminate may furthermore comprise a second release liner 8a being provided on a second surface of the adhesive layer 4. The second surface release liner 8a, if present, is removed from the laminate prior to the bonding step, e.g., by means of a peeling process. The first surface release liner 8b may be a high adhesion release liner, and the second surface release liner 8a may be a low adhesion release liner. After the second surface release liner 8a has been removed from the laminate it is cut completely by means of a laser beam from a laser cutting device (not shown), as indicated by the arrows in the left-hand drawing of Fig. 5A. Subsequently, the cut laminate is bonded to the substrate 1, as indicated by the arrow in the middle drawing of Fig. 5A, and the multilayer material comprising the substrate 1, the adhesive layer 4 and the release liner 8b is removed from the vacuum plate holder 53.

The first surface release liner 8b is removed prior to a subsequent step, e.g., the application of the optional cover film 5 and/or the optional protective film 7. Since the release liner 8b is already cut to the shape of the substrate 1, the removal may be difficult to achieve, and specific means may to be applied. For example, another tape could be attached to the top of the release liner 8b which then allows the removal of the first surface release liner 8b. Alternatively, a vacuum method could be applied, e.g., a suction cup which grabs the liner 8b and allows its removal.

Generally, when cutting an organic substance with a laser, fumes are generated which may affect the surfaces of the cut material. When cutting the pressure sensitive adhesive layer 4 and the first surface release liner 8b care has to be taken that the generated fumes are carefully removed and do not deposit on the pressure sensitive adhesive layer. One means for achieving this would be to provide a suction means (e.g., a suction hood) suctioning off the generated fumes.

Figure 5B illustrates another preferred embodiment of the present invention which is similar to the embodiment described above with reference to Figure 5A. One difference to the method of Figure 5A is that only the pressure sensitive adhesive layer 4 is cut with the laser beam, as indicated by the four arrows in Figure 5B, and the first surface release liner 8b remains substantially intact on the cut pressure sensitive adhesive layer 4. Accordingly, the removal of the first surface release liner 8b is substantially easier since the edges of the adhesive layer 4 and the release liner 8b are not coterminous, and the release liner 8b can be engaged by mechanical means. However, also in this case, care has to be taken that the fumes generated during the laser cutting do not effect the pressure sensitive adhesive layer 4. In both embodiments described above with reference to Figures 5A and 5B, the cutting of the laminate is carried out prior to the bonding step.

On the other hand, in the embodiment described with reference to Figure 5C the pressure sensitive adhesive layer 4 is bonded to the substrate 1 prior to the cutting step. More precisely, the optional second surface release liner 8a is removed so as to expose the pressure sensitive adhesive layer 4 to the environment, and the laminate consisting of the pressure sensitive adhesive layer 4 and the first surface release liner 8b is then provided to a bonding station where the laminate is bonded to the substrate 1. After the bonding step the laminate is cut with one or more laser beams, as indicated by the four arrows in the top right drawing of Figure 5C, along an outer circumference and an inner hole so that the shape of the laminate essentially corresponds to the ring-shape of the substrate 1. Also in this case, special means may need to be provided for the removal of the first surface release liner 8b. However, unlike in the preceding embodiment described with reference to Figures 5A and 5B, the fumes generated during the laser cutting are not critical as they essentially deposit on the first surface release liner 8b which will be removed anyway.

In a further embodiment (not shown) similar to the one described above with reference to Figure 5C, one or more laser beams are directed at the same radial position but from the opposite direction than shown in Figure 5C, and are controlled such that only the pressure sensitive adhesive layer 4 is cut and the first surface release liner 8b remains substantially intact. This allows an easier removal of the first surface release liner 8b from the pressure sensitive adhesive layer 4. With this embodiment, the problems associated with the generated fumes and with the removal of the first surface release liner 8b can be overcome.

Figures 5D to 5K illustrate film lamination processes, wherein in the embodiments of Figures 5D to 5G the cutting step is carried out prior to bonding and in the embodiments of Figures 5H to 5K the cutting step is carried out after the bonding step.

In the embodiment of Figure 5D a laminate is used which essentially corresponds to said shown in Figure 2, i.e., the laminate consists of a pressure sensitive adhesive layer 4, a cover film 5, a protective film 7 and an optional second surface release liner 8a. In this embodiment the cover film 5 and the protective film 7 form the at least one additional layer on the pressure sensitive adhesive layer 4. If the second surface release liner 8a is present on the laminate, it is preferably removed by appropriate removing means prior to the cutting and/or bonding step. As shown in Figure 5D, the laminate is fed to a cutting station, only a part of which is schematically shown in the left hand drawing of Figure 5D. Subsequently, the triple layer laminate is cut completely, wherein care has to be taken that the pressure sensitive adhesive layer 4 is not affected by the generated fumes. Subsequently, the laminate is bonded to the substrate 1 in a similar manner as already described with respect to the embodiment shown in Figure 5A. The corresponding shapes of the substrate 1 and of the laser cut laminate should be properly aligned.

The embodiment shown in Figure 5E essentially corresponds to that of Figure 5D, however, the laminate does not comprise a protective film 7. Therefore, care has to be taken that the cover film 5 is not affected by the fumes generated during laser cutting. The remaining steps are essentially the same as described above with respect to Figure 5D.

The embodiment illustrated in Figure 5F relates to a method for providing a multilayer material comprising at least one substrate 1, at least one pressure sensitive adhesive layer 4 and at least one other layer which is embodied in this particular embodiment by the cover film 5 and the protective film 7. The method of this embodiment comprises the steps of providing said at least one other layer of material, namely the cover film 5 and the protective film 7, cutting said other layer so that its shape essentially corresponds to that of the substrate 1 and the adhesive layer 4 provided thereon, wherein the cutting is carried out by means of a laser beam, and bonding said at least one other layer of material to the adhesive layer 4 provided on the substrate 1. Preferably, the substrate 1 and/or the adhesive layer 4 have previously been cut into their respective shape by means of a laser beam. However, it may be advantageous to cut the adhesive layer by other means such as die-cutting.

In the embodiment of Fig. 5F a method of laser cutting a combination of the cover film 5 and the protective film 7 is shown. Also in this case care has to be taken that the cover film 5 is not affected by the fumes. Subsequently to the cutting step, the laminate of the two films 5 and 7 is bonded onto the substrate 1, which is already covered with the pressure sensitive adhesive layer 4. This configuration of substrate 1 and adhesive layer 4 can be produced with any of the above described methods, e.g., as shown in Figs. 5A to 5C or through die-cutting. Also in this case the laminate has to be properly aligned with the substrate 1 carrying the pressure sensitive adhesive layer 4.

The embodiment of Fig. 5G essentially corresponds to said of Fig. 5F, however, without the protective film 7 on the cover film 5. The layer to be cut in Figure 5G is significantly thinner than that of Fig. 5F, which accordingly also results in the reduced generation of the fumes, so that the cover film 5 is less likely to be affected by the fumes. In this case the at least one other layer is the cover film 5. The laser cutting step and the bonding step of this embodiment essentially correspond to the respective steps described previously with reference to Fig. 5F.

In the following the embodiment of Fig. 5H will be described which constitutes a presently preferred embodiment of the method and system for manufacturing the optical storage medium of the present invention. As shown in Fig. 5H a laminate is provided consisting of a pressure sensitive adhesive film 4, a cover film 5, a protective film 7 and an optional second surface adhesive layer 8a, which is initially removed from the laminate. The provided laminate is bonded to the substrate 1, and subsequently the laminate is cut by one or more laser beams so that the laminate's shape substantially corresponds to that of the substrate 1.

In this embodiment the generation of fumes does not present a particular problem as they can only deposit on the protective film 7 which has to be removed anyway. Furthermore, the removal of the protective film 7 is significantly easier than that of the first surface release liner 8b since its adhesion to the cover film 5 is usually significantly smaller.

The embodiment illustrated in Fig. 5I essentially corresponds to the aforementioned embodiment of Fig. 5H. However, the laminate of this embodiment consists only of the pressure sensitive adhesive layer 4, the cover film 5 and the optional second surface release liner 8a which is, if present, peeled off the second surface of the pressure sensitive adhesive layer 4. After removal of the liner 8a the laminate is bonded to the substrate 1 and subsequently, the laminate is cut by at least one laser beam so that the shape of the laminate essentially corresponds to the shape of the substrate 1. Accordingly, in this embodiment, the generated fumes cannot affect the pressure sensitive adhesive film 4, but only the cover film 5. Thus, appropriate means should be provided for protecting the cover film 5 from the fumes.

Although in the embodiments shown in Figs. 5H and 5I the laser beams, as indicated by the four arrows, are directed to the top of the laminate, i.e., to the protective film 7 in the embodiment of Fig. 5H or to the cover film 5 in the embodiment of Fig. 51, the laser light may also be directed to the laminate from the opposite direction. This may be advantageous particularly for the embodiment of Fig. 5H since the laser beam can be controlled so that it only cuts through the adhesive layer 4 and the cover film 5 while the protective film 7 remains substantially intact. This allows easier removal of the protective film 7 at a later stage of the manufacturing process.

The embodiment illustrated in Fig. 5J shows the bonding of the laminate consisting of the cover film 5 and the protective film 7 onto the substrate 1 already carrying the pressure sensitive adhesive layer 4. This embodiment is similar to the embodiment described with reference to Fig. 5F and differs therefrom substantially in that the bonding step is carried out prior to the cutting step. The substrate 1 with the pressure sensitive adhesive layer 4 may be provided, for example, by any of the processes described with reference to Figs. 5A to 5C, i.e., including laser cutting, or through die-cutting. The laser cutting of the laminate comprising the cover film 5 and the protective film 7 is carried out after the laminate has been bonded to the adhesive layer 4, wherein also in this embodiment the laser beam may be directed from the top or the bottom of the laminate or both, as explained above with reference to Figs. 5H and 5I. In this embodiment the generated fumes are also not critical.

The embodiment shown in Fig. 5K essentially corresponds to the previously described embodiment of Fig. 5J, wherein only the cover film 5 is provided without a protective film 7. Furthermore, this embodiment is similar to the embodiment described above with reference to Fig. 5G and differs therefrom only in that the bonding step is carried out prior to the laser cutting step. In this case the layer to be cut is relatively thin so that the amount of the generating fumes can be reduced. Nevertheless, care has to be taken that the cover film 5 is not affected by the fumes.

In accordance with the present invention it is possible to proceed in the manufacturing of optical storage media in two main steps, namely in the generation of a substrate, preferably by an injection molding process in which the inner hole as well as the outer circumference of the substrate are readily produced through the molding process itself, and in applying or bonding additional layers onto the substrate.

With the system and method for manufacturing optical storage media by use of laser cutting several advantages can be achieved over the prior art. For example, the cutting of the additional layers bonded onto a molded DVD or DVR substrate is not convenient with a mechanical cutting method, like die cutting. In particular, the alignment of the shape, i.e., the outer circumference and the inner hole, of the DVD or DVR, on the one hand, and the layer to be cut, on the other hand, is extremely difficult. Minor displacements in the order of several hundreds of a millimeter can cause manufacturing problems and/or result in an unacceptable optical storage medium. Furthermore, the lifetime of the laser cutting means used in the present invention is much larger than the lifetime of a mechanical tool which is in fact very limited, e.g., to about 300,000 to 500,000 cycles whereas the lifetime of a laser cutting device is essentially unlimited. A further major problem with conventional mechanical cutting tools is the generation of particles that are critical for the further processing as described, e.g., in WO-A-95/21444. This problem does not exist with the laser cutting method of the present invention.

In addition, the mechanical cutting causes problems due to the difference in flexibility of the cover film 5 and the pressure sensitive adhesive film 4. Another advantage of the present invention is that the cutting with the laser beam is easier with respect to the alignment of the cutting line relative to the shape of the optical storage medium. Also, the method of the present invention is applicable to a continuously moving tape or laminate out of which one or more discs have to be cut. The respective position of the laser beam can be directed in co-ordination with the moving tape or laminate utilizing, e.g., a deflection mirror system. Accordingly, the system of the present invention can easily be incorporated inline in existing manufacturing facilities.

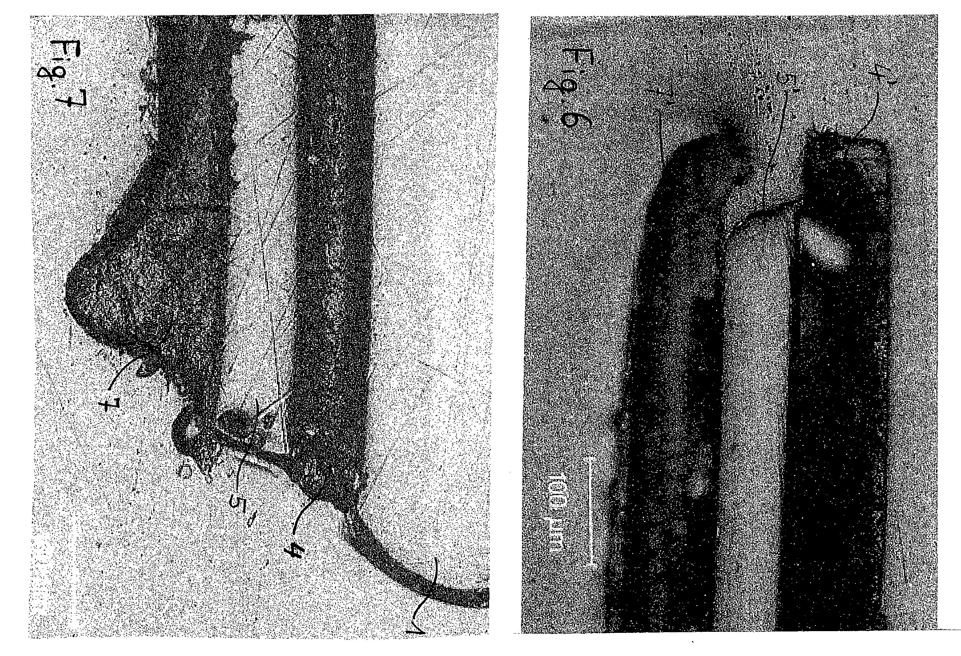

Fig. 6 shows a light microscopical image of a laminate that has been cut with a mechanical tool. As described above, it is extremely difficult to mechanically cut a laminate when it is already placed onto the substrate. It is almost impossible to match the circumference of the mechanical cutting tool with that of the substrate, unless it is chosen to be significantly smaller than that of the substrate which, however, causes waste of material and is not acceptable. Therefore, Fig. 6 shows only the laminate produced by mechanical cutting without a substrate. The laminate consists of the following layers from the top in Fig. 6:
- pressure sensitive adhesive layer 4', 3M number 8142, thickness 55µm;
- polycarbonate film 5' from LOFO High Tech. Film GmbH, Weidstrasse 2, 79576 Weil am Rhein, Germany, thickness 75 µm;
- protective film 7' GHX 173 from Bischoff & Klein GmbH & Co., Rahestrasse 47, 49525 Lengerich, Germany, thickness 50 µm.

The cutting tool used had a circular cutting edge with a height of 3 mm and a radius of 19 mm. The internal side of the tool is cylindrical in shape, the external side conical with an angle of about 5 degrees. The tool is moving in the upward direction of Fig. 6.

It can be seen from Fig. 6 that the circumference of the laminate does not have an even surface. The intermediate layer 5' of polycarbonate is the hardest one, while both the pressure sensitive adhesive layer 4' as well as the protective film 7' are significantly more flexible. This results in an expansion of these layers during the cutting process providing a configuration as shown in Fig. 6. When removing the lower protective layer 7' it can be seen that the pressure sensitive adhesive layer 4' projects from the polycarbonate layer 5' leaving a free circular portion of adhesive which leads to manufacturing problems in the prior art process and which is, therefore, not acceptable.

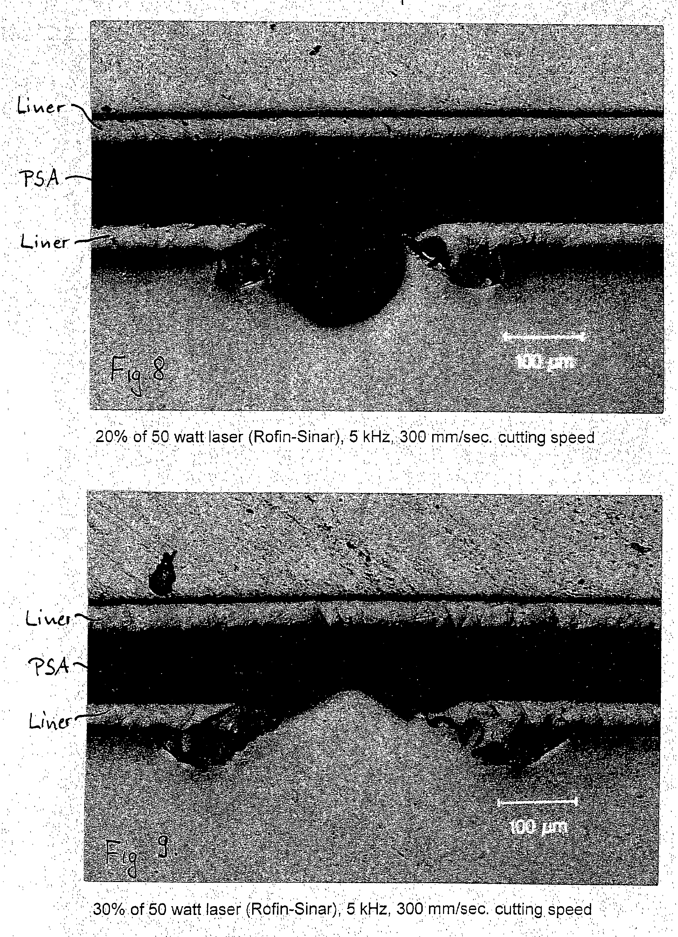

In contrast, an optical storage medium in which the laminate has been laser cut and which has been produced, e.g., with the method of Fig. 5H, is shown in Fig. 7. The layers of the optical storage medium of the invention illustrated in Fig. 7 are from the top to the bottom:
- substrate 1 (only partially visible), thickness about 1.2 mm;
- pressure sensitive adhesive layer 4, 3M number 8142, thickness 55 µm;
- polycarbonate layer 5 from LOFO High Tech. Film GmbH, Weidstrasse 2, 79576 Weil am Rhein, Germany, thickness 75 µm;
- protective film 7, GHX 173 from Bischoff & Klein GmbH & Co., Rahestrasse 47, 49525 Lengerich, Germany, thickness 50 µm.

The laminate consisting of the pressure sensitive adhesive layer 4, the polycarbonate film 5 and the protective film 7 was placed onto the substrate 1 and subsequently cut with a laser. This configuration essentially corresponds to the embodiment described with reference to Fig. 5H. The characteristics of the laser were as follows:
- CO₂ laser ROFIN-SINAR RS 25 W available from ROFIN-SINAR Laser GmbH, Berzeliusstrasse 83, 22113 Hamburg, Germany
- power up to 50 W
- operation mode: pulsed at frequencies between 2 kHz and 8 kHz or at the maximum power continuous wave (CW)
- focal length of the focus lens: 254 mm
- cutting speed 100-200 mm/s
- energy per cutting length: determined by the power in mW divided through the cutting speed in mm/s. The resulting unit is mJ per mm or Joule per meter.

The energy input accordingly ranges between 60 J/m for a power of 12.5 W and a cutting speed of 200 mm/s to 250 J/m for a power of 25 W and a cutting speed of 100 mm/s. The laser is pulsed at a relatively high frequency in the order of 2 to 8 kHz and it could be observed that the specific frequency has little influence on the cutting efficiency and quality.

Fig. 7 shows the result of an optimization of the above given ranges for power, cutting speed and frequency. The sample was obtained with a power of 22.2 W, a frequency of about 5 kHz, a cutting speed of about 150 mm/s and an energy per cutting length of 150 J/m.

The laser beam can be guided through a mirror system in any desired configuration. An adjustment was effected so that a circle was described which was slightly within the outer circumference of the used DVD substrate. The laser beam was focussed on the upper surface of the laminate. Fig. 7 shows that the pressure sensitive adhesive layer 4 and the polycarbonate layer 5 were cut in a manner that they have a more or less common borderline, while the protective film 7 is somewhat enlarged at the border line. This is, however, insignificant as the protective film 7 has to be removed anyway. Furthermore, the bonded and laser cut laminate is substantially coterminous with the shape of the substrate 1, as clearly shown in Fig. 7.

During the laser cutting fumes are generated which may cause problems. Therefore, care has to be taken to remove these fumes, typically by using an appropriate exhaust system. Furthermore, it is advantageous to follow a production method in which particularly the pressure sensitive adhesive layer is not exposed to these fumes. The configuration as shown in Fig. 7 does not create any problems as the fumes can only affect the protective layer 7 which would have to be removed anyway. Furthermore, the optical storage medium as such can only be affected at the outer circumference which is also not critical. Therefore, it is normally sufficient to utilize standard methods for the removal of the fumes.

Although in connection with the present invention a CO₂ laser may be preferred, other types of lasers can also be used for carrying out the present invention, e.g., a Nd:YAG laser.

For the embodiments in which the laminate is laser cut after the bonding step it is particularly advantageous that the substrate is coated with a reflective material so as to constitute a mirror reflecting laser light. This avoids damages of the substrate caused during laser cutting. Furthermore, the bonding process between the substrate and the laminate can be carried out in a manner similar to that shown in Fig. 2, wherein the roll 51 is replaced by a support table on which the substrate is positioned so that the laminate can be bonded to the substrate by means of the roll 50. In this embodiment, the roll should be relatively soft and should have a relatively large diameter so that a relatively small application angle can be achieved.

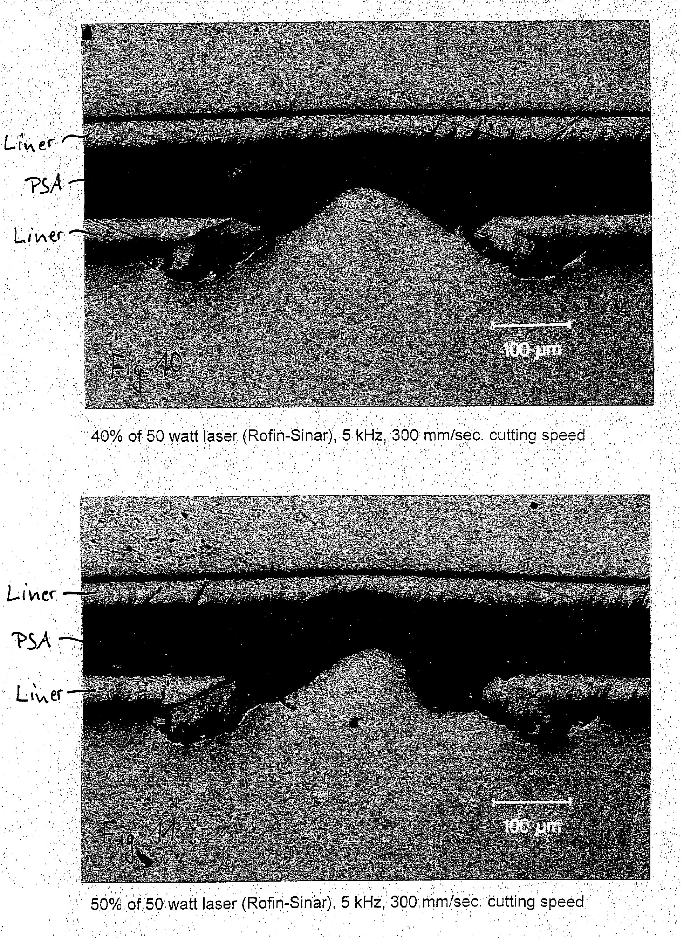

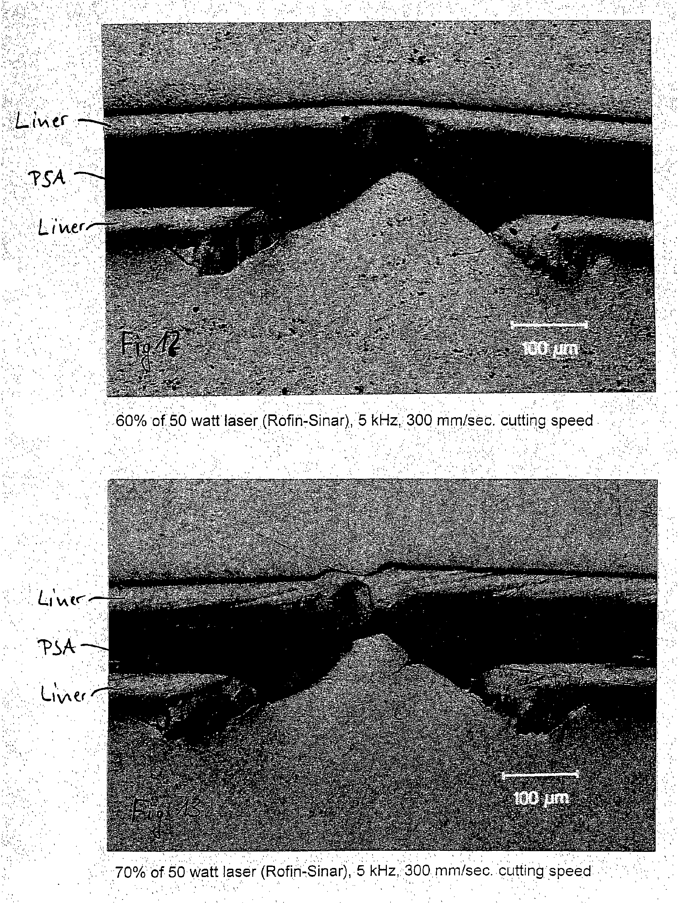

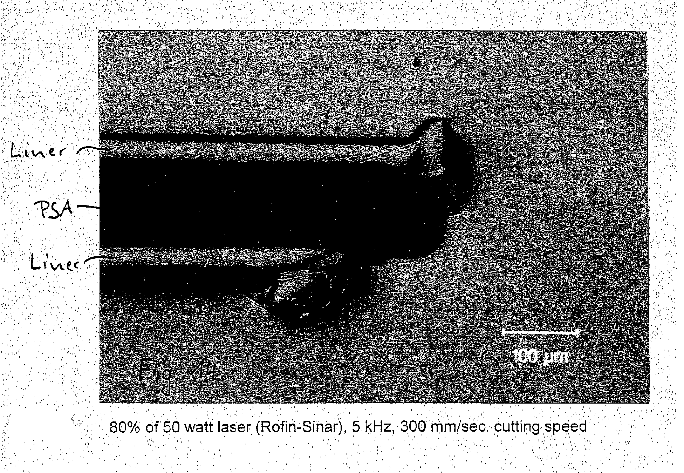

In the following Figures 8 to 14 images of test laminates are illustrated that have been laser cut in accordance with the principles of the present invention. These Figures particularly show how the variation of the laser power directed to the laminates influences the properties and appearance of the produced laser cuts, so as to optimate the laser cutting process.

Figures 8 to 14 are light microscopical images of laser cuts through a liner/pressure sensitive adhesive layer/liner construction of a 3M number 8142 tape, wherein the cross-sections of the film are embedded in epoxy resin. As can be seen from Figures 8 to 14, by proper variation of the laser power the individual layers can be cut separately. A laser power of about 80% of a 50 W laser (ROFIN SINAR), 5 kHz, 300 mm/s cutting speed, is appropriate in order to cut through both liners and the adhesive layer.

Accordingly, the method and system for manufacturing an optical storage medium in accordance with the present invention is an essential improvement in the art since the production of the optical storage media can be made more efficient and manufacturing costs can be reduced, while at the same time the optical storage medium itself has improved characteristics.

Although in the foregoing the present invention has been described with reference to laminates for the manufacturing of optical storage media, it is noted that the present invention is also applicable to the production of any multilayer material, in particular to those multilayer materials that are bonded together by means of at least one pressure sensitive adhesive layer.

In the following some test methods and Examples will be discussed in order to further describe the composition and properties of the various layers preferably applied in the optical storage medium of the present invention.

### Test methods

### Surface roughness

Surface roughness of pressure-sensitive adhesive layers 4 was measured using a laser profilometer, available from UBM Messtechnik GmbH, Ettlingen, Germany, as Model Number UB-16. The instrument incorporates software which calculated the surface roughness as peak-to-valley height of the surface according to DIN 4768. The average surface roughness R_{z} recorded in micrometers (µm) is defined as the average peak-to-valley height value of several individual measurement areas determined according to DIN 4762.

Each pressure-sensitive adhesive layer had a first and a second major surface, each of which was protected by a release liner. Each of the two release liners was either the same or different with respect to roughness and/or release coating. Each light-transmissive cover film had a first and a second major surface which were obtained unprotected from the manufacturer.

Prior to the determination of the roughness the respective liner was removed. The surfaces to be evaluated were always sputtered with gold twice before evaluation using a sputter coater, available as Balzers Model SCD 050 from Pfeifer Hochvacuum GmbH in Wiesbaden, Germany. The first sputtering was conducted with the target gold surface parallel to the adhesive layer for 60 sec with a current of 60 milliamps (mA). The second sputtering was conducted with the gold target at an angle of 30 degrees out of parallel for 60 sec with a current of 60 mA.

### Visual inspection of surfaces by scanning electron microscopy and light microscopy, respectively

A scanning electron microscope, available from JEOL, Tokyo, Japan, as model JSM-5400 was used to provide micrographs of surfaces of release liners, pressure-sensitive adhesive layers 4, releasable protective films 7 and light-transmissive cover films 5. A light microscope available from Reichert-Jung, Bensheim, Germany, as model Polyvar MET was used to provide microphotographs of surfaces of release liners, releasable protective films and light-transmissive cover films used for casting pressure-sensitive adhesive layers and light-transmissive cover films, respectively. Light microscopy photomicrographs were taken using the dark field incident light mode.

### Flatness measurement

The thickness variation of the pressure-sensitive adhesive layer, the light-transmissive cover film and the laminate comprising the pressure-sensitive adhesive layer and the light-transmissive cover film, respectively, was measured using at least one of the following devices:
(i) the DVD tester Biref 126 S DVD commercially available from Dr. Schenk GmbH, Martinsried, Germany; the DVD tester consists of a turntable onto which the disc is mounted, a laser/sensor system and the measuring computer unit;
(ii) the DVD tester ETA-DVD 80 commercially available from STEAG HamaTech AG, Sternenfeld, Germany; the DVD tester consists of a turntable onto which the disc is mounted, a laser/sensor system and the measuring computer unit;
(iii) the capacitive thickness gauge Profiler 140 E commercially available from Modern Control, Minneapolis, MN, U.S.A.

The measurements of the flatness of the pressure-sensitive adhesive layer with (i) or (ii), respectively, were performed by laminating the pressure-sensitive adhesive layer between two disc-shaped polycarbonate substrates with smooth surfaces having a diameter of 12 cm, a thickness of 0.6 mm and a center hole with a diameter of 15 mm. The inner surface of one of the substrates had an aluminum coating on its inner surface and the inner surface of the other substrate had a semi-transparent coating of silicon carbide (SiC). The thickness was measured with the Biref 126 S DVD tester (i) or the ETA-DVD tester (ii), respectively, point-by-point. The Biref tester had a maximum resolution in radial direction of 1 mm and in tangential direction of 2 mm. The thickness resolution is within the range of 1 µm. The ETA-DVD tester had a maximum resolution in radial direction of 0.1 mm and in tangential direction of 0.1 mm, the thickness resolution is 0.1 µm within the range of 25 - 120 µm.

The flatness of the light-transmissive cover film was measured using capacitive thickness gauge Profiler 140 E (iii). The thickness resolution was 0.01 µm and the test speed was 1 cm/sec.

The flatness of the sum of the thickness of the light-transmissive cover film and the pressure-sensitive adhesive layer in the assembled optical storage medium was performed using the ETA-DVD tester (ii). A compact disc-shaped substrate bearing a reflective aluminum layer was laminated with a pressure-sensitive adhesive layer 4 and a light-transmissive cover film 5 in the vacuum bonding apparatus 60. The bonded disc comprising a 0.2 mm substrate, a reflective aluminum layer, a pressure-sensitive adhesive layer, a light-transmissive cover film and a releasable protective film was mounted on the ETA-DVD tester after removal of the releasable protective film.

### Optical retardation

The optical retardation of the light-transmissive cover film and the pressure-sensitive adhesive layer was measured in the assembled optical storage medium using the Biref 126 S DVD tester.

### 180° peel adhesion of releasable protective films from light-transmissive cover films

A sample of the respective releasable protective film was laminated to the Pokalon OG 46 GL polycarbonate light-transmissive cover film with a thickness of 75 µm with a rubber roller of 1 kg by applying hand pressure. The laminates were stored for 2 hours and then oven aged for 1 hour at 60°C. 1 inch (2.54 cm) wide test specimens were cut and the exposed polycarbonate surface of the laminate was bonded onto an aluminum substrate with a double-coated pressure-sensitive adhesive tape commercially available as Tape # 444 from Minnesota Mining and Manufacturing Company ("3M"), St. Paul, MN, USA. One end of the exposed surface of the respective releasable protective film which is facing up was lifted off and wrapped with a piece of a masking pressure-sensitive adhesive tape which is available from 3M Company. The set-up was stored for 24 hours. Then the aluminum plate was fixed in the lower clamp and the masking tape was fixed in the upper clamp of a standard tensile test equipment. A 100 N force gauge was used. The peel test speed was 150 mm/min and the peel angle was about 180°.

### Examples

### Example 1

A solvent cast polycarbonate film with a thickness of 75 µm was provided as a polycarbonate light-transmissive cover film available under the trade designation "Pokalon OG46 GL" from Lonza, Weil/Rhein, Switzerland. The flatness of the film was qualitatively assessed by means of light microscopy, using a magnification of 600x Photomicrographs which were taken from the two major surfaces of the Pokalon OG46 GL film, show very smooth surfaces which are basically free of flaws. The surface roughness R_{z} was approximately < 0.1 µm. The thickness variation as measured with the 140 E Profiler was 0.32 µm over an arbitrarily selected distance of 25 mm in cross direction and 0.05 µm over an arbitrarily selected distance of 25 mm in machine direction.

A suitable piece of the light-transmissive cover film "Pokalon OG46GL" (approximately 60 cm x 30 cm) was placed on a smooth PVC surface. A pressure-sensitive adhesive layer (no carrier layer but pure adhesive layer) was then provided as optically clear laminating pressure-sensitive adhesive transfer film # 8142 which is available from 3M Company. The pressure-sensitive adhesive layer was protected by two essentially smooth polyester release liners (surface roughness R_{z} of the release liner less than 2 µm). The thickness of the # 8142 pressure-sensitive adhesive layer was 50 µm with a thickness variation of ± 2 µm as measured with the Biref 126 S DVD tester. The # 8142 pressure-sensitive adhesive layer further had a refractive index of 1.475, a surface roughness of approximately 0.5 µm on each surface and a cleanliness of such as to meet class 1000 clean-room requirements.

A suitable piece of the # 8142 pressure-sensitive adhesive layer which was greater than the size of the light-transmissive cover film was then provided with two adhesive tape tabs adhered to the release liner and extending past the perimeter of the linered pressure-sensitive adhesive sheet to aid in removal of the release liners without contaminating the pressure-sensitive adhesive layer. After removal of the low release liner, the # 8142 pressure-sensitive adhesive layer was laminated with its exposed surface onto the Pokalon OG46 GL polycarbonate cover film. The adhesive face was placed near one edge of the polycarbonate film and pressed onto the exposed surface of the polycarbonate film from one edge to the other using a rubber lamination roller with a mass of 1 kg with hand pressure, in such a manner that the exposed adhesive surface on the release liner was fed under the lamination roller while being bent backwards over the roller so that the release liner made an angle of approximately 45° or less with itself. The exposed surface of the flexible pressure-sensitive adhesive layer on the release liner was thus applied to the exposed surface of the polycarbonate film in such a manner as to prevent the entrapment of air bubbles at the interface between these surfaces. The resulting laminate was then flipped so that the exposed release liner surface was placed on the stainless steel substrate and a surface of the polycarbonate film was exposed.

Then an adhesive tape having serial number 2104 C, comprising a backing and bearing a low-release pressure-sensitive adhesive layer, available from 3M Company, was provided as releasable protective film. A suitable piece of the releasable protective film which was greater than the size of the polycarbonate film was laminated with its pressure-sensitive adhesive layer onto the exposed polycarbonate film using a rubber lamination roller with a mass of 1 kg with hand pressure.

Then a disc-shaped base member or substrate suitable for preparing a DVR disc comprising a disc-shaped polycarbonate substrate having an outer diameter of 120 mm, a thickness of 1.2 mm and a central hole with a diameter of 15 mm, was prepared by forming a master disc and subsequent injection molding following the procedure described in EPA-0 729 141, col. 6, Ins. 14 - 46. The disc-shaped substrate had a first flat major surface and a second major surface opposite to the first one which bore pits created by injection molding. An approximately 50 nm thick aluminum layer was applied on the structure of pits on the second major surface by means of sputtering as is disclosed in EP-A-0 729 141, col. 6, Ins. 47 - 55.

Then a polyamide plate coated with a silicon-urea release coating exhibiting an indent suitable for fixing the disc-shaped DVR substrate during subsequent lamination, was provided. After removal of the polyester release liner from the laminate comprising the releasable protective layer, the light-transmissive cover film, the pressure-sensitive adhesive layer and the polyester release liner and placing of the DVR substrate into the indent with the information storage layer facing up, the exposed pressure-sensitive adhesive layer of the laminate is placed near one edge of the DVR substrate and pressed onto the exposed information storage layer progressively from one edge to the other using a rubber lamination roller with a mass of 1 kg with hand pressure under a lamination angle of approximately 45° or less as was described above.

The resulting DVR disc was then flipped so that the releasable protective film was placed on the polyamide substrate, and the inner and outer edges of the laminate adhered to the information storage layer of the substrate were cut along the outer and inner periphery of the substrate. For this cutting operation a laser beam was used as discussed above in connection with Fig. 7 and according to Fig. 5H. In particular, the laser power was 22.2 W, the frequency ws 5kHz, the cutting speed was 150 mm/s, and the energy per cutting length was 150 J/m. The result from the cutting process can essentially be seen in Fig. 7.

The resulting DVR disc was flipped and an adhesive tape tab was attached to the exposed surface of the releasable protective layer to aid in the removal of the releasable protective layer.

The combination of the light-transmissive cover film and the pressure-sensitive adhesive layer in the DVR disc obtained was tested for flatness using the ETA-DVD 80 DVD tester as is described above.

The DVR disc obtained was furthermore tested for flatness measuring the radial and tangential tilt of the laser beam of the Biref 126 S DVD tester when it is reflected from the information storage layer of the disc. The optical retardation of the DVR disc was ± 25 nm.

### Comparative example 1

The comparative example was essentially the one as described above with reference to Fig. 6, and the corresponding discussion of its properties.

### Example 2

Example 1 was repeated with the difference that optically clear laminating pressure-sensitive adhesive # 8141 which is available from 3M Company, was used as pressure-sensitive adhesive layer. The # 8141 pressure-sensitive adhesive layer was protected by two essentially smooth polyester release liners (surface roughness R_{z} of the release liners less than 2 µm) and had a thickness of 25 µm ± 1.5 µm as measured with the Biref 126 S DVD tester.

The example was repeated three times and the results of the measurements are summarized in table 1.

**Table 1**

| Run | Minimum thickness [µm] | Maximum thickness [µm] | Average thickness [µm] | Standard deviation of thickness [µm] |
|---|---|---|---|---|
| 1 | 101.6 | 103.2 | - | - |
| 2 | 101.3 | 102.4 | - | - |
| 3 | 102.2 | 103.4 | 102.8 | 0.3 |

Also this configuration was laser cut as described above in connection with Fig. 7 revealing essentially the same results.

### Example 3

Example 2 was repeated with the difference that bonding of the laminate comprising the releasable protective film, the light-transmissive cover film and the exposed pressure-sensitive adhesive layer to the exposed surface of the information storage layer of the disc-shaped substrate was performed by means of a wheel-bonding device which is disclosed in co-pending US patent application S. N. 09/065,295 of the present applicant. The disc-shaped substrate bearing the information storage layer as well as the laminate comprising the releasable protective film, the light-transmissive cover film and the exposed pressure-sensitive adhesive layer are mounted on two slightly curved surfaces. The curvature of these surfaces corresponds to the outer curvature of rolls with a diameter of at least 1.2 m. The information storage layer of the disc-shaped substrate and the pressure-sensitive adhesive layer of the laminate are now put in contact by counter-rotation of the curved surfaces and by means of a certain pressure. The process is done in a way which ensures that the still unbonded area of the disc-shaped substrate bearing the information storage layer as well as the unbonded area of the laminate comprising the releasable protective film, the light-transmissive cover film and the exposed pressure-sensitive adhesive layer, respectively, maintain contact to the curved surfaces, whereas the already bonded area releases from the respective curved surface. The thus bonded configuration was then laser cut as described above in connection with Fig. 7 providing essentially the same results.

The radial and tangential, respectively, tilt of the reflected beam of a vertically incident laser beam was measured with the Biref 126 S DVD tester for the disc-shaped substrate comprising the information storage layer prior to laminating the above laminate of pressure-sensitive adhesive layer/Pokalon OG46GL polycarbonate film/# 8141 pressure-sensitive adhesive layer and for the resulting optical recording medium disc after such lamination with the wheel-bonding device. The example was repeated fourteen times and the results are summarized in table 2.

It is evident from Table 2 that the average value of the span of the radial tilt amounts to 0.50 ± 0.10° prior to lamination and that this value is only slightly increased to 0.58 ± 0,15° after lamination. Likewise, the average value of the span of the tangential tilt is 0.35 ± 0.06° prior to lamination, and the corresponding value after lamination is 0.43 ± 0.09°. This shows that the method of wheel-bonding disclosed in US patent application 09/065,295 results in a small and acceptable deterioration of the flatness of the optical recording medium only.

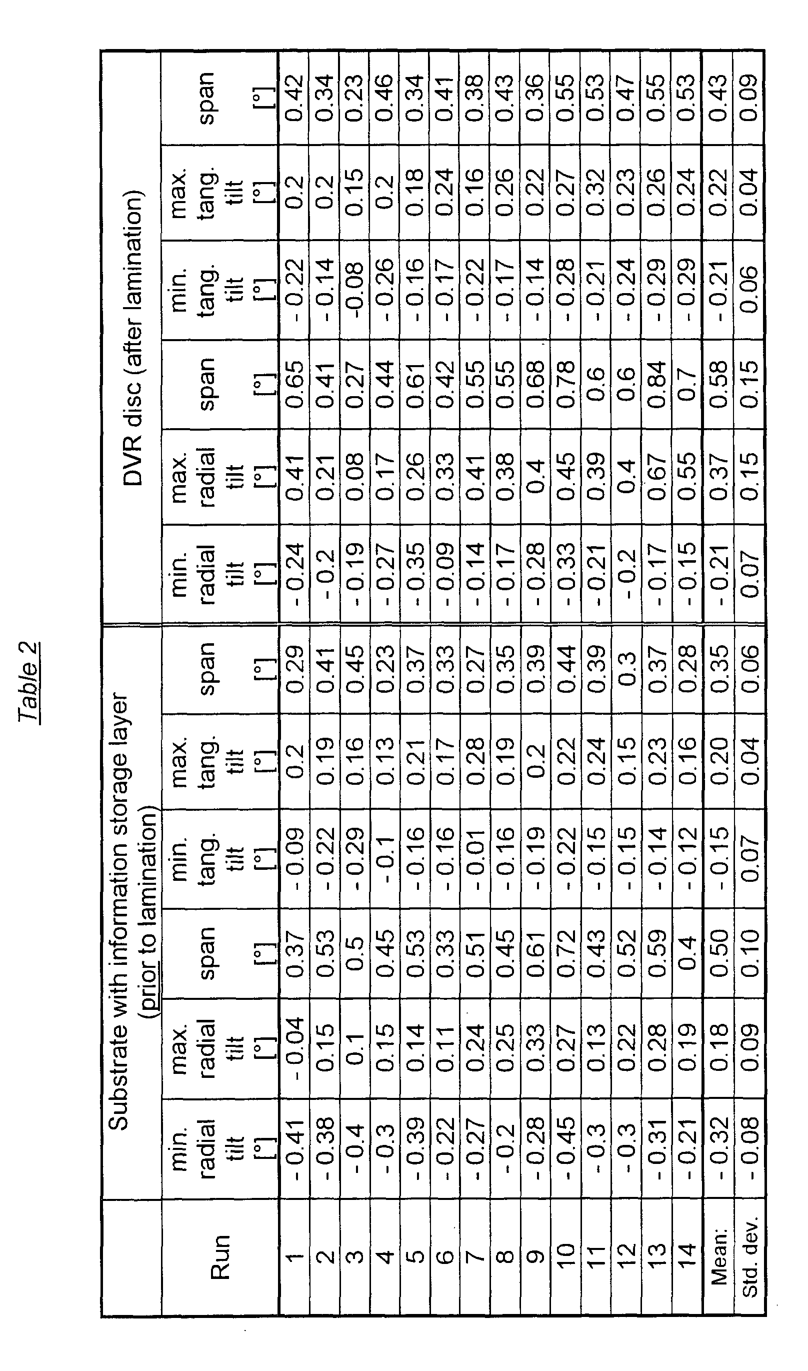

### Example 4

The following releasable protective films were provided:
a) A two-layer releasable protective film comprising a first layer of a polymer mixture of 50 wt. % of polypropylene PPC 8750 (commercially available from Fina Deutschland GmbH, Bleichstr. 2 - 4, D-60313 Frankfurt, Germany), and 50 wt. % of low density polyethylene LD 0304 (commercially available from ELF Atochem Deutschland GmbH, Tersteegenstr. 28, D-40401 Duesseldorf, Germany) with a thickness of 50 µm and a second layer of EVA copolymer Evatane 2803 (commercially available from ELF Atochem Deutschland GmbH, with a thickness of 26 µm, was obtained by coextrusion as is described in some detail in example 1. The releasable protective film exhibited a matte surface of the PPC 8750/LD 0304 polymer layer and a smooth self-adhering surface of the Evatane.
b) A two-layer releasable protective film comprising a first layer of low density polyethylene LD 0304 with a thickness of 50 µm and a second layer of EVA copolymer Evatane 2803 was obtained by coextrusion following the procedure applied above in a). The releasable protective film exhibited a smooth surface of the LD 0304 layer and a smooth self-adhering surface of the Evatane 2803 layer.
c) A releasable protective laminate film comprising two polymer layers with one of them exhibiting self-adhering properties available under the trade designation "GH-X 173" was obtained from Bischof & Klein, Lengerich, Germany. The film had a thickness of 50 µm and was smooth on both major surfaces.
d) A releasable protective film comprising a backing and bearing a low-release pressure-sensitive adhesive layer, was obtained from 3M Company as adhesive tape # 2104 C. The backing exhibited a smooth exposed surface.
e) A releasable protective film comprising a backing bearing a low-release pressure-sensitive adhesive, was obtained from Nitto Deutschland GmbH, Am Sandbach 32, D-40878 Ratingen, Germany, as adhesive tape 5057 A5. The backing exhibited a smooth exposed surface.

The 180° peel adhesion of each of the releasable protective films from the Pokalon OG46 GL polycarbonate film was measured as is described above. The results of the measurements are summarized in Table 3.

**Table 3**

| **180° peel force [cN/2.54 cm]** | | | | | | |
|---|---|---|---|---|---|---|
| | Peeling in direction of lamination of releasable protective film to polycarbonate film | | | Peeling perpendicular to direction of lamination of releasable protective film to polycarbonate film | | |
| Releasable protective film | No. of measure ments | Average value | Stand. dev. | No. of measure ments | Average value | Stand. dev. |
| a | 10 | 9.01 | 2.7 | 6 | 6.6 | 0.6 |
| b | 4 | 12.51 | 7.6 | - | - | - |
| c | 4 | 8.0 | 6.0 | 6 | 4.9 | 0.7 |
| d | 4 | 46.4 | 10.4 | - | - | - |
| e | 4. | 102.9 | 16.7 | - | - | - |

## Claims

1. A method for manufacturing an optical storage medium from which information can be read out and/or into which information can be recorded by means of a beam (6) of electromagnetic radiation, said optical storage medium comprising at least one substrate (1) and at least one pressure sensitive adhesive layer (4), said method comprising the steps of:
- providing a first laminate comprising said at least one pressure sensitive adhesive layer (4) having a first adhesive surface and an opposite second adhesive surface and at least one additional layer applied to said first surface of said adhesive layer (4);
- providing said at least one substrate (1) of said optical storage medium having a first surface and an opposite second surface;
- cutting at least said adhesive layer (4) of said first laminate so that its shape substantially corresponds to that of said substrate (1), wherein said cutting is carried out by means of a laser beam; and
- bonding said second surface of said adhesive layer (4) to said second surface of said substrate (1).

2. A method for manufacturing an optical storage medium from which information can be read out and/or into which information can be recorded by means of a beam (6) of electromagnetic radiation, said optical storage medium comprising at least one substrate (1) and at least one pressure sensitive adhesive layer (4), said method comprising the steps of:
- providing a first laminate comprising said at least one pressure sensitive adhesive layer (4) having a first adhesive surface and an opposite second adhesive surface and at least one additional layer applied to said first surface of said adhesive layer (4);
- providing said at least one substrate (1) of said optical storage medium having a first surface and an opposite second surface;
- bonding said second surface of said adhesive layer (4) to said second surface of said substrate (1); and
cutting at least said adhesive layer (4) of said first laminate so that its shape substantially corresponds to that of said substrate (1), wherein said cutting is carried out by means of a laser beam.

3. The method of claim 1 or 2, wherein in said cutting step said first laminate is cut completely.

4. The method of claim 1 or 2, wherein in said cutting step only said adhesive layer (4) of said first laminate is cut.

5. The method of any of claims 1 to 4, wherein said additional layer applied to said first surface of said adhesive layer (4) comprises either a cover film (5), or a laminate of a cover film (5) and a protective film (7), or a first surface release liner (8b).

6. The method of claim 5, further comprising the steps of:
- removing said first surface release liner (8b) after said cutting step and said bonding step so that said first surface of said adhesive layer (4) is exposed;
- providing a cover film (5) or a second laminate comprising a cover film (5) and a protective film (7);
- cutting said cover film (5) or said second laminate (5, 7) so that its shape substantially corresponds to that of said substrate (1) and said adhesive layer (4) provided on the second surface thereof; and
- bonding said cover film (5) to said first surface of said adhesive layer (4).

7. The method of claim 6, modified in that said bonding step of said cover film (5) and/or said second laminate (5, 7) is carried out prior to said cutting step of said cover film (5) and/or said second laminate (5, 7).

8. The method of claim 6 or 7, wherein said cutting step of said cover film (5) and/or said second laminate (5, 7) is carried out by laser cutting.

9. The method of any of claims 1 to 8, wherein said cutting step(s) is/are carried out by means of a deflection mirror system while said laminate(s) and/or said substrate (1) are moving.

10. A method for providing a multilayer material, in particular for use in a method in accordance with any of claims 1 to 9, said multilayer material comprising at least one substrate (1), at least one pressure sensitive adhesive layer (4) and at least one other layer, said method comprising the steps of:
- providing said at least one other layer of material;
- cutting said at least one other layer of material so that its shape substantially corresponds to that of said substrate (1) and said adhesive layer (4) provided thereon, wherein said cutting is carried out by means of a laser beam; and
- bonding said at least one other layer of material to said adhesive layer (4).

11. The method of claim 10, wherein said at least one other layer of material comprises a cover film (5) or a laminate of a cover film (5) and a protective film (7).

12. The method of claim 10 or 11, modified in that said bonding step of said at least one other layer is carried out prior to said cutting step of said at least one other layer.

13. A system for manufacturing an optical storage medium from which information can be read out and/or into which information can be recorded by means of a beam (6) of electromagnetic radiation, said optical storage medium comprising at least one substrate (1) and at least one pressure sensitive adhesive layer (4), the system comprising:
- means (53) for providing a first laminate comprising said at least one pressure sensitive adhesive layer (4) having a first adhesive surface and an opposite second adhesive surface and an additional layer applied to said first surface of said adhesive layer (4);
- means (54) for providing said at least one substrate (1) having a first surface;
- means (60) for bonding said first laminate to said first surface of said substrate (1); and
- laser cutting means for cutting at least said adhesive layer (4) of said first laminate so that its shape substantially corresponds to that of said substrate (1).

14. The system of claim 13, wherein said laser cutting means is adapted to cut said first laminate completely.

15. The system of claim 13, wherein said laser cutting means is adapted to cut only said adhesive layer (4) of said first laminate.

16. The system of any of claims 13 to 15, comprising means for providing a cover film (5) and/or a protective film (7) and bonding said cover film (5) and/or said protective film (7) to said first surface of said adhesive layer (4), upon removal of said additional layer.

17. The system of claim 16, comprising laser cutting means for cutting said cover film (5) and/or said protective film (7) so that their shape substantially corresponds to that of said substrate (1).

18. The system of any of claims 13 to 17, comprising a deflection mirror system being adapted to carry out said laser cutting during movement of said laminate and/or said substrate.

19. The system of any of claims 13 to 18, wherein said laser cutting means comprises at least one of the following features:
said laser cutting means is a CO₂ laser or a NdYAG laser;
said laser cutting means is pulsed at frequencies between 2 and 8 kHz, preferably about 5 kHz;
said laser cutting means has a cutting speed between 50 and 500 mm/s, preferably between 100 and 400 mm/s, and more preferably between 150 and 300 mm/s;
said laser cutting means is adapted to apply energy at a level between 40 and 400 J/m, preferably between 60 and 250 J/m, and more preferably about 150 J/m.

20. An optical storage medium from which information can be read out and/or into which information can be recorded by means of a beam (6) of electromagnetic radiation, said optical storage medium comprising at least one substrate (1) having on one surface thereof at least one first information storage layer (3a) and at least one radiation-transmissive cover film (5), wherein said cover film (5) is bonded to said surface of said substrate (1) by means of a radiation-transmissive pressure sensitive adhesive layer (4), and wherein the outer and/or inner circumferential shape of at least said adhesive layer (4) is obtained by laser cutting so as to substantially conform to the circumferential shape of said substrate (1) and/or said cover film (5).

21. The optical storage medium of claim 20, wherein, when more than one cover film (5) is provided, said cover films (5) are bonded to each other by means of one or more laser cut light-transmissive pressure sensitive adhesive layers (4).

22. The optical storage medium of claim 20 or 21, wherein said light-transmissive pressure sensitive adhesive layer (4) and said at least one cover film (5) have an essentially coextensive border line.
